# EUROPEAN PATENT SPECIFICATION

(11) **EP 1 649 658 B1**
(45) Date of publication and mention of the grant of the patent: **01.08.2007**
(21) Application number: 03817936.2
(22) Date of filing: 01.08.2003
(51) Int. Cl.: H04L 29/06, H04L 29/12

(54) **METHOD AND APPARATUS FOR ROUTING A SERVICE REQUEST**
VERFAHREN UND VORRICHTUNG ZUM ROUTEN EINER DIENSTANFORDERUNG
PROCEDE ET APPAREIL D'ACHEMINEMENT D'UNE DEMANDE DE SERVICE

(43) Date of publication of application: 26.04.2006
(73) Proprietor: TELEFONAKTIEBOLAGET LM ERICSSON (publ), 164 83 Stockholm (SE)
(72) Inventor: DE-POORTER, Antoine, E-28042 Madrid (ES); MAS ROSIQUE, Maria, Luisa, E-28002 Madrid (ES); PALLARES LOPEZ, Miguel, Angel, E-28017 Madrid (ES)
(74) Representative: Tonscheidt, Andreas
(86) International application number: PCT/EP2003/008553
(87) International publication number: WO 2005/015870

(56) References cited:
- WO-A-02/21804
- WO-A-03/007571
- US-B1- 6 282 574

## Description

### FIELD OF THE INVENTION

The present invention relates to telecommunications systems and, more precisely, to the methods for the routing of service requests in said systems and to the apparatuses involved therein.

### BACKGROUND

A state-of-the-art telecommunication system can comprise various functional entities, also known as telecommunication nodes, arranged to serve communication and services to a plurality of user terminals utilized by the users of said system. Depending on the specific characteristics of a concrete telecommunication system, it can comprise various kind of telecommunication nodes, each performing one or a set of specialized functions; wherein, depending on implementation details, each node can be implemented within a single physical machine, or be distributed across various physical machines, each implementing a part of the total functionality required and/or standardized for said node. The term "server entity" shall be used hereinafter in this application to refer to a node in a telecommunication system which performs a specific functionality, regardless if it is, implemented within one physical machine or various cooperating physical machines.

Among other server entities, a telecommunication system can comprise one or a plurality of interconnected *communication server entities* (CS), which are entitled to intervene in the signaling related to the provision of communications between user terminals (e.g.: voice calls, data calls, etc.), as well as in the signaling related to the provision of services to said user terminals (e.g.: usage of messaging services); wherein the provision of a communication between two user terminals, as well as the provision of a service to a user terminal, can require the intervention of one or more server entities in said telecommunications system. Examples of communication server entities CS are: switching/routing nodes such as MSCs (Mobile Switching Centres), SGSNs (Serving GPRS Support Nodes) or GGSNs (Serving GPRS Support Nodes) in a mobile system; Proxy Servers in a SIP-based system (e.g.: as described in *"SIP: Session Initiation Protocol"* IETF-RFC3261); CSCFs (Call State Control Functions) in the IMS (IP Multimedia Subsystem) of a 3rd. generation mobile system (e.g.: as described in the stage-2 of the IMS, specification TS 23.228 V5.5.0, Jun-2002); etc.

For the purpose of identifying individually each one of the plurality of users on a telecommunication system, and/or their corresponding user terminals, users of a telecommunications system are assigned to identifiers (hereinafter: user identifiers, user-IDs). The types of user-IDs, and even the number of user-IDs per user, can vary depending on the characteristics of a telecommunications system. For example, nowadays a user can be assigned to one or more user-IDs of various types such as: a E.164 number (also called "*telephone number*"), an "URI" (Uniform Resource Identifier), an "*h323-ID*", etc.

User-IDs are primarily used to identify a counterpart user in a communication. Thus, when a given user "A" establishes a voice call or a data call with another user "B", a communication request is sent which conveys the user-ID of the user "B", and which will be used to route said communication requests towards a terminal of user "B". Said communication request can traverse one or more communication server entities (CSs) depending, for example, on if both users, "A" and "B", are served from the same or different CSs. According to the signaling protocol utilized, a communication request can be conveyed in various signaling messages. For example, a communication request can be conveyed within an IAM (Initial Address Message) message according to ISUP (ISDN User Part), an INVITE message according to SIP, a SETUP message according to H.323, etc; wherein the communication request contains a user-ID of the destination user in a format appropriate to the signaling protocol utilized for signaling the communication request (e.g.: ISUP, SIP, H.323, etc.).

Similarly, some services provided by a state-of-the-art telecommunications system can also be assigned to individual identifiers (hereinafter: service identifiers, service-IDs, SIDs). Service-IDs can have the same format as cited above for user-IDs, thus, not only easing its usage by end users, but allowing to use the same routing mechanisms in the telecommunications system for service-IDs as for user-IDs.

Accordingly, the access to a specific service, identified by a specific service-ID, can be achieved by sending a service request containing said service-ID; wherein, service requests can also be signaled according to any of the signaling protocols mentioned above which are used to convey communication requests between users.

However, as opposed to a user-ID, which identifies a user (or a terminal assigned to a user), a service-ID identifies a specific service in a server entity (hereinafter referred as *application server entity*, AS) which hosts said service, or, in other words, which hosts service logic to accomplish said service and to process a service request related to it. Also, as will be understood with some service examples given below, service-IDs trend to have a more temporary nature than user-IDs, as they can be created, and destroyed depending on the existence or not of a given service, while a user-ID trends to remain while the corresponding user keeps served by the telecommunications system.

Some examples of service types commonly provided by application server entities AS, and usually assigned to service-IDs for their individual identification, shall now be given with reference to "Presence" and "*Instant Messaging*" services. A generic description for both services, Presence and Instant Messaging, is provided in IETF-RFC2778 ("*A model for Presence and Instant Messaging*").

In short, the Presence service comprises the subscription of a user to information related to the status of another user or group of users (e.g.: an "on-line"/off-line" status information indicating if a given user is presently registered with a terminal in the telecommunications system), as well as the finding and retrieval of the necessary data for the provision of said information. Using the terminology currently used for Presence service, the user who subscribes to obtain status information of other user or users is called "watcher", while the users which provide said status information are called "presentities". Thus, for example, a user acting as "watcher" can subscribe to presence information related to another user ("presentity") or related to a group of pre-defined users. For this purpose, he can have defined several lists in an AS entitled to serve a presence service for a watcher, each list comprising one or various user-IDs corresponding to the other users and identified by a specific identifier (i.e.: a service-ID) which identifies a service instance of a Presence service for a watcher which concerns to the status monitoring of a set of pre-defined users. For example, this user can have defined one or more lists containing user-IDs of a group of friends, of a group of professional colleagues, of a group of relatives, etc. Assuming, as an example case, that the service-IDs take a URI format, a service-ID for lists as mentioned above could be identified by URIs like (e.g.) "*MyBikerFriends@PresenceService.op2*.*com*", "*AccountDepCompanyX@PresenceService.op2.com*", etc.

If user acting as "watcher" wants to be notified about what friends of a group of friends in (e.g.) a buddy list are presently connected to the telecommunications system, then said user can send a service request from his terminal which comprises the corresponding service-ID. If the protocol used to convey signaling messages related to subscriptions of watchers to Presence service is SIP (e.g.: as defined in IETF-DRAFT "*Presence Event Package for SIP*", draft-ietf-simple-presence-10.txt), then a SIP message "SUBSCRIBE" containing one of these service-IDs in the "*Request-URI*" field of the "SUBSCRIBE" will, carry said service request. When the service request arrives to the corresponding AS, in order to accomplish with-the service request, the AS can send further SUBSCRIBE messages each comprising the identifier of a "presentity" comprised in the corresponding distribution list.

Briefly, the Instant Messaging service consists in sending small messages that are delivered immediately to "on-line" users (i.e.: users is presently registered within a terminal in the telecommunications system). As in Presence service, one or more lists can be defined for Instant Messaging service, each list comprising the identifiers of a set of users, wherein an instance of the Instant Messaging service is identified by an individual service-ID assigned to each list. As opposed to Presence service, wherein the lists of users monitored by a "watcher" user have, generally, a private nature and are thus intended to be utilized by said user, lists for messaging can be publicly known (e.g.: they can be defined in the AS without the need of end user intervention, for example, defined by the telecom operator), thus allowing a plurality of users to send instant messages to a publicly known list. As in the example cited above, assuming service-IDs taking URI format, a service-ID for a list for distributing an Instant Message to a particular group of users could be, for example, "*DistributionList77@MSGSservice.op2.com*".

Similarly as for Presence service, if a given user wants to send an instant message to a given group of users, he can send a service request from his terminal which comprises the corresponding service-ID. If the protocol used to convey signaling messages related to Instant Messaging is SIP (e.g.: as defined in IETF-RFC3428 "*SIP extension for Instant Messaging*"), then a SIP message "MESSAGE" containing one of these service-IDs in the "*Request-URI*" field of the "MESSAGE" (as well as the text message desired to be forwarded) will carry said service request. When the service request arrives to the corresponding AS, to accomplish with the service request, it can send further "MESSAGE" messages, each comprising an identifier of a receiver user comprised in the corresponding distribution list.

Further examples of services identified by service-IDs and provided by ASs can be given with regard to dial-in conferencing in a modern telecommunications system, and tele-voting services.

In a dial-in conferencing service, a user "A" arranges a multiconference which can include, for example 3 more users: "B", "C" and "D". User "A" can connect (e.g.: via HTTP, WAP, etc.) with, for example, an AS which is entitled to provide multiconferencing service (e.g.: by controlling its related signaling and, eventually, controlling a media handler). The AS then assigns a specific service-ID for this specific conference (e.g.: "*conf456@homenetwork.com*") and gives it back to user "A". The dial-in conference organizer user "A" distributes the service-ID to the other participants to be used at the time pre-arranged for the conference (for example, he can use the aforementioned SIP message "MESSAGE" for this purpose, or send it by other means such as e-mail, short message, etc.). Alternatively, the user "A" can arrange the dial-in conference by other means (e.g.: he contact an operator and receive from him the service-ID). Then, for joining the conference, the participants (users "A", "B", "C" and "D") can send service requests which contain said service-ID and that will be routed towards said AS. Thus, for example, if the protocol used to convey signaling messages is SIP, any of the participants can send a service request to join the conference by sending an INVITE message conveying the service-ID assigned to the dial-in conference (e.g.: "*conf456@homenetwork.com*") in the "*Request-URI*" field of the INVITE. At reception of service requests from the dial-in conference participants, the AS can subsequently establish the corresponding media session (or order its establishment to a media handler) so as to allow media reception from each party and its subsequent distribution to the others.

In tele-voting services, the users can send service request containing the corresponding service-ID to, for example, control a ranking list or to answer to a public opinion poll. In this case, service requests containing the corresponding service-ID (e.g.: "*TheTeleVotingOfTodayYES@TVXZZ.com*") would be routed to an AS which can be entitled to its storage and further processing.

In the examples of services cited above it can be observed that, depending on particularities of a given service type, there can be a plurality of service-IDs, each identifying a specific service instance of a service type (for example, different service instances of a Presence service). Thus, since a specific service-ID is generally intended to uniquely identify a specific service, the term service-ID is used across this text to refer to an identifier of a given service, regardless whether all the possible instances of said service type are identified or not by the same service-ID.

In earlier telecommunications systems identifiers (either: user-IDs or service-IDs) embedded addressing information, thus allowing the routing of a communication request or a service request using the received identifier (user-ID or service-ID) as such. This was due to the fact that these identifiers were assigned to end-points (e.g.: user's terminals, ASs) according to numbering plans which were fully related to the geographical location of the end-points; for example: according to the geographical location of a user terminal assigned to a user in the telecommunications system identified by a user-ID, or according to the geographical location of an AS entitled to serve a service identified by a service-ID.
For example, a telephone number such as +34 91 1234567 could be: a user-ID of a user in a PSTN (Public Switch Telephone Network) whose terminal is served by a CS, such as a local exchange in the PSTN, located in Spain (34), in Madrid area (91), and which serves access to (e.g.) 1000 subscribers (e.g.: numbered from 4000..4999). Similarly it could be the service-ID of an individual voice mailbox service served by an AS in Spain, in Madrid area, wherein said AS serves (e.g.) 1000 individual voice mailboxes (e.g.:4000..4999).
Thus, an identifier so assigned (user-ID or service-ID) was directly usable for routing a request (communication request or service request) which contained it towards its final destination.

However, as new needs appeared (such as mobility, allowing a given user to dynamically register from different geographical/physical locations), said tight (i.e.: non dynamic) identifier-location relationship tended to disappear; thus allowing independence between a user-ID and the corresponding addressing information (AI) usable for routing a communication request towards a terminal of said user.

Particularly, for services, other needs dealing with factors, such as-scalability, reliability and flexible allocation of resources, caused also to make service-IDs independent of the physical location of the respective ASs, and thus, independent of the corresponding addressing information usable for routing service requests to them. Nonetheless, all the above does not preclude that, in some cases, the addressing information which corresponds to a given identifier (user-ID or service-ID) is the same as said identifier.

To accomplish with a flexible relationship between identifiers (user-IDs and service-IDs) (usually static) and their corresponding addressing information (usually dynamic) a specialized server entity (hereinafter referred as *location server entity*, LS) is provided in state-of-the-art telecommunication systems. Examples of location server entities LS are: HLRs (a Home Location Registers) in 2nd. generation mobile systems, HSS (Home Subscriber Servers) in 3rd. generation mobile systems, "*Redirect Servers*" in SIP-based systems, or "*Gatekeepers*" in H.323-based systems.

A LS stores what is commonly known as location information, which comprises a plurality of identifiers (user-IDs and/or service-IDs) and the corresponding (dynamic) addressing information (AI) usable for routing requests that contains any of said identifiers.

The kind of addressing information AI stored for a given user-ID or service-ID in an LS can vary according to different implementations. For example, AI can contain: network addresses (i.e.: ISO Layer-3 addresses, such as IP-addresses); data-link layer addresses (i.e. ISO Layer-2 addresses) ; aliased addresses such as URIs which can be further translated to (e.g.) the corresponding network address, for example, by means of a further DNS (Domain Name System) query; etc. Also, the entity addressed by the AI stored in relationship with a given identifier can vary; thus, for example, the AI can contain an address of a CS which is entitled for serving access to a given user terminal or to an AS, an address of a user terminal or an address of an AS hosting a service, etc. Furthermore, in addition of an address, or instead of it, addressing information AI can contain data (hereinafter referred as "*address-determining-capability*") that can be utilized to further select a CS which can serve access to a given user terminal or to an AS (e.g.: a CS capability data which can be used to find a CS matching said capability). Examples of this latest case, wherein an address-determining-capability is utilized, can be found in chapter 6.1.1 ("User registration status query") of the 3rd. Generation Partnership Project 3GPP Specification TS 29.228 (V5.2.0, Dec-2002), named as Serving-CSCF capabilities ("*S-CSCF* capabilities"); and also in chapters 3.6 ("*Location-Info-Answer LIA Command*") and 5.5 "*Server-Capability AVP*" of the IETF-DRAFT "*Diameter Multimedia Application*" (*draftbelinchon-aaa-diameter-mm-app-00.txt,* Feb-2003), named as *"Server-Capabilities".*

Accordingly, a communication server entity CS, at reception of a communication request or of a service request, can obtain from a LS the addressing information it needs for routing said received request towards its final destination; wherein, as will be later detailed, the way a CS obtains addressing information for identifiers (user-IDs or service-IDs) from a LS can vary according to different implementation alternatives (e.g.: a location query, a redirection indication). In summary, well-known techniques allow to route service requests in a state-of-the-art telecommunication system according to the service-IDs they contain, so as to forward said service requests towards the corresponding AS using equal (or substantially similar) routing techniques as the ones utilized for routing communication requests between user terminals.

An AS can be entitled to serve a given service for all its instances, for some of them, and even it can be arranged to serve a plurality of different services. In any case, since the provision of a given service relies on the intervention of an AS entitled to serve it, the availability of said AS can be of a major importance, since it is likely to consider it can receive a high rate of service requests from different users. Therefore, it should be desirable that its processing means are mainly dedicated to serve only those service requests which are qualified to be served, while minimizing the processing time and resources used to detect (and, eventually, reject) those service request which, by any reason, are unsuitable to be served.
Prior art document US 6,282,574, by Voit et al., Aug. 28, 2001, describes an enhanced name translation server executing a conditional analysis in response to queries or requests for name translations.

### SUMMARY OF THE INVENTION

It is an object of the present invention to minimize the impact in an application server of those service requests which are not likely to be attended.

This object is achieved by a method as claimed in claim 1. This object is also achieved by a location server entity as claimed in claim 13 or by a communication server entity as claimed in claim 21, which can cooperate with an application server entity as claimed in claim 27. This object is also achieved by a computer program as claimed in claim 28, or by a computer program as claimed in claim 29.

In one aspect, the invention relates to a method for routing in a telecommunications system a service request related to a service identified by a given service identifier and hosted in an application server entity. When a service request arrives to a communication server entity in said telecommunications system, a usage rule is checked before granting the usage of the corresponding addressing information related to said service identifier. The usage rule can comprise one or more individual conditions that a service request containing a given service identifier shall fulfil before it is further routed towards the corresponding application server entity. The usage rule can be sent from an application server entity to a location server entity which serves location information to a plurality of communication server entities so that, when, for example, a location query is received in said location server requesting addressing information usable for routing a service request containing a given service identifier, the corresponding usage rule can be checked, and thus, said location server can provide or deny the corresponding addressing information accordingly. Alternatively, the usage rule can be downloaded in one or various communication server entities, either: directly from an application server, or from a location server; so that, any of the communication server entities, at reception of a service request can check the usage rule which corresponds to the service identifier contained in said request before taking further steps to route it towards its destination.

A method according to the invention ensures that only service requests which are, according to the corresponding usage rule, likely to be attended by the corresponding application server are routed to it. Since a service request can be stopped (i.e.: not further routed) in an early stage before it gets to the application server, the adverse effects of *Denial Of service* attacks. against the resources of a telecommunications system are thereby minimized, particularly in what concerns the resources hosted and/or utilized by application servers. With an appropriate setting of the corresponding usage rules, the method also allows to apply different routing conditions for routing service requests related to a plurality of different services.

In a further aspect, the invention relates to a location server entity which stores in relationship the identifier of a service hosted in an application server entity and addressing information usable for routing a service request containing said service identifier, and which is arranged to provide said addressing information for routing a service request containing said identifier. According to the invention, the location server entity further stores a usage rule which states the condition(s) for granting the usage of said addressing information for routing purposes, and is further arranged to provide said addressing information only if it does not contravene the usage rule. Further, in another aspect, the invention relates to a computer program which, once loaded in a computer-based machine, such as a computer-based location server, makes it to provide information for routing a service request as described here in relationship with a location server entity according to the invention.

A location server entity as described herein prevents, by denying the provision of the necessary addressing information, an improper or unseasoned service request containing a given service identifier to get the application server which hosts the service identified by said service identifier.

In a further aspect, the invention relates to a communication server entity which is arranged to receive a service request, obtain addressing information related to a service identifier contained in said service request; and further route the service request using said obtained addressing information. According to the invention, the communication server entity is further arranged to obtain a usage rule which determines if said addressing information can be used for routing purposes, and to further route the received service request only if it does not contravene the usage rule. Further, in another aspect, the invention relates to a computer program which, once loaded in a computer-based machine, such as a computer-based communication server, makes it to route a received service request as described here in relationship with a communication server entity according to the invention.

A communication server entity as described herein prevents an improper or unseasoned received service request containing a given service identifier to get the application server which hosts the service identified by said service identifier, by denying the further routing of said service request.

In a further aspect, the invention relates to an application server entity which is arranged to communicate with a second server entity which can intervene in the signaling of a service request, such as a location server entity or a communication server entity. According to the invention, the application server entity sends to a second server entity a usage rule which grants the usage of the corresponding addressing information which is related to a given service identifier. An application server entity according to the invention can thus be further adapted to comply with any of the embodiments of the method described before.

By its cooperation with a location server entity and/or with a communication server entity, an application server entity as described herein allows, to set or modify at any time the condition(s) for routing a service request related to a service, by simply notifying the new or otherwise modified usage rule to a location server which stores location information related to said service, or to a communication server which can receive and further route a service request related to said service. The content of the usage rule sent by the application server entity can depend, for example, on dynamic conditions known by said application server and can be related to a service that it hosts or that is hosted by another application server.

### BRIEF DESCRIPTION OF DRAWINGS

Figure 1 shows a layered schematic view of a state-of-the-art telecommunications system showing various functional entities on each layer.

Figure 2 shows an schematic view of some functional elements in a state-of-the-art server entity in a telecommunications system.

Figure 3 shows an example of a data structure stored in a server entity according to the invention.

Figures 4, 5 and 6 shows simplified signaling flows according to various embodiments of the invention.

### DETAILED DESCRIPTION

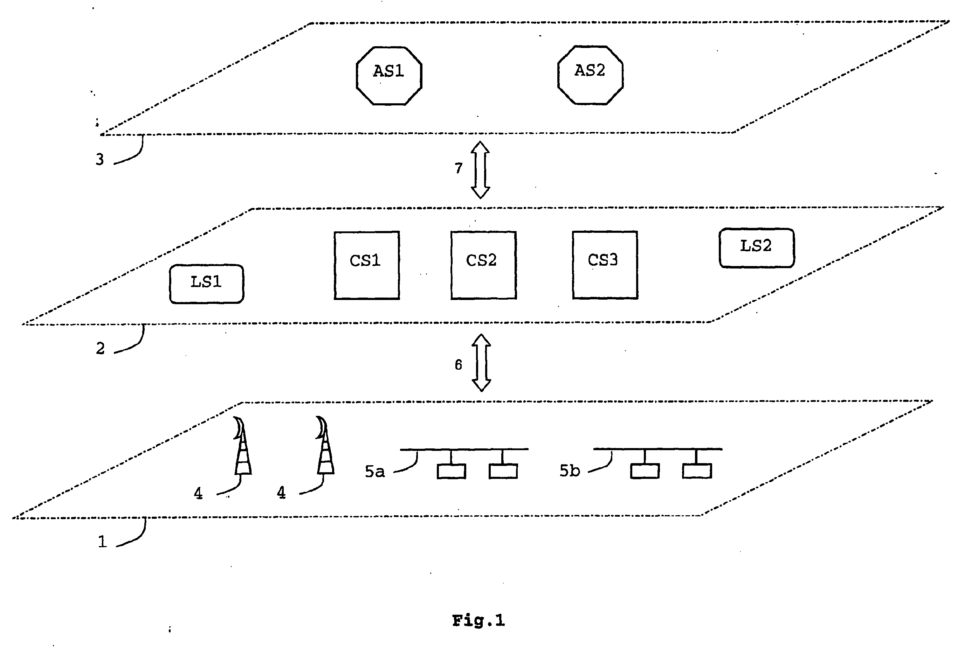

Some exemplary embodiments of the invention shall now be described in detail with references to figures 1 to 6.

Fig.1 shows a logically layered schematic view of a generic state-of-the-art telecommunications system showing various server entities. The abstraction represented in Fig.1 does not intend to relate to a specific telecommunications system nor intends to depict all the possible server entities which can exist on it, but rather those which, being commonly implemented in modern telecommunications systems, are relevant to illustrate the invention.

The lowest layer (1) shown in Fig.1 comprises a set of access points (4,5a,5b) which provide the physical (wired or wireless) connection of the user's terminals (not shown) to the telecommunications system so as to allow said terminals exchange signaling and/or media with server entities in the telecommunication system. The nature of an access point determines the functions it has to provide. Access points can range from simple wired point-to-point connections, to more complex connections which can require signaling and/or media transcoding for the information exchanged with terminals and other server entities in the telecommunications system. Local access policy and control functions, can also be carried out by access points. Depending on the access types supported in a telecommunication system, this layer (1) can comprise: radio base stations (4), providing radio access to mobile terminals; LANs (Local Area Networks) (5a) or a WLANs (wireless LANs) (5b) providing access, respectively, to terminals wired or wireless connected to said LANs or WLANs; point-to-point cables and/or fiber connecting a user terminal to a communication server entity (CS); etc.

The second layer (2) depicted in Fig.1 comprises a set of server entities (CS1, CS2, CS3, LSI, LS2) which are intended to intervene in the signaling of communications and services which are provided through the telecommunications system. Eventually, CSs can also intervene in the switching, routing or control of the media exchanged in said communications and services. Since a telecommunications system can comprise many access points (4,5a,5b) being located at very distant geographical locations, it usually comprises a plurality of communication server entities (CS1,CS2,CS3) entitled to receive and further route signaling to/from two (or more) end-points of a communication (e.g.: two or more terminals, one terminal and one AS, etc.). As cited earlier, various kind of communication server entities (CS) are known state-of-the-art telecommunications systems; wherein, some of them can be dedicated (or assigned) to serve the access to end-points, by routing to/from them the signaling related to communications or services and, when needed, route said signaling to/from other CSs, while other CSs can be dedicated to provide inter-connection between CSs (e.g.. meshing CSs of various network operators and/or different geographical areas within a telecommunication system).

Location server entities (LS1, LS2) depicted in the second layer (2) of Fig. 1 store addressing information usable for routing communication requests and/or service requests based on an identifier (user-ID, service-ID) contained in said requests. Accordingly, LSs are arranged to facilitate to the CSs the necessary addressing information to route service and communication requests received in said CSs; although, in some implementations, they are arranged to facilitate the appropriate addressing information to a user terminal, so as the user terminal can route a communication request or a service request using the received addressing information (e.g.: as it is described for a H.323 Gatekeeper in figure 26 in ITU-T Recommendation H.323, Nov-2000, with respect to the "*Direct Endpoint Call Signalling*" mode).
Within a telecommunication system, more than one LS can exist depending, for example, on scalability and reliability factors, and also depending on the number of network operators and/or network domains in said system.

The way a CS obtains addressing information for identifiers (user-IDs or service-IDs) can vary according to different implementation alternatives.

For example, a CS intermediating in a signaling which has received a signaling message conveying a service request (e.g.: a SETUP message, an INVITE message, an IAM message, etc.) can send a location query to a LS containing the service-ID received in said request. Examples of location queries are: MAP (Mobile Application Part) operations such as "*SendRoutingInfo*" in a 2nd. generation mobile system, "*Cx-query*" or "*Cx-Location-Query*" in the IMS of a 3rd. generation mobile system, "*Location Request*" (*LRQ*) in an H.323 system, DNS queries (e.g. as described in IETF-RFC3263), etc. As a result of said location query, the LS sends back a response (e.g.: "*SendRoutingInfoACK*", "*Cx-query Resp*", "*Cx-Location-Query Resp*"*,* "*Location Confirm*" *LCF,* etc.) containing the corresponding addressing information usable for routing the received service request. Alternatively, a LS can receive a signaling message conveying a service request from a CS, and answer back to said CS with a redirection indication message which contains the appropriate addressing information usable for routing said request (e.g.: a *Redirection* response "3XX" as defined in IETF-RFC3261 for SIP protocol).

In some cases, a CS can embed LS functionality, or, in other words, there can be a CS-LS co-location of functionalities. For example, a CS can use cache techniques and store (e.g.: during a pre-defined time) location information so as to avoid a further query to a LS; thus, said CS can utilize addressing information for an identifier (user-ID or service-ID) which was previously obtained in a previous query to a LS with the same identifier. Also, a CS can obtain addressing information for identifiers (user-IDs or service-IDs) from a LS without a previous query message sent from the CS to the LS as a result of a service or communication request received in said CS. Thus, for example, a CS can receive off-line information from a LS so as to build up routing tables comprising a plurality of identifiers with their corresponding addressing information. Furthermore, a CS can receive addressing information for some identifiers from a management system (e.g.: as a part of its configuration data). In other cases, as a CS can be involved in the registration and/or admission process of an end-point (e.g.: a user terminal, or an AS for a service), it can learn during said process an address of the end-point and store it as addressing information usable for routing further signaling towards said end-point.

The third layer (3) of Fig.1 comprises specialized server entities devoted to the provision of services (application server entities AS1,AS2). As it is done for user terminals, a CS can be assigned to serve signaling to/from said AS related to services it is entitled to serve.

In Fig.1 communication lines (6,7) are shown to illustrate (plainly) the communication between entities in the different logical layers (1,2,3) depicted in the figure for exchanging signaling, control data, etc. However, it shall be understood that server entities within the same logical layer (as depicted in the abstraction of Fig.1) can also communicate. Details for achieving the communication between the server entities (CSs, LSs, ASs) depends on implementation details of the communication network(s) existing in the telecommunication system. For example, communication between server entities can take place across one or more underlying communication networks using the same or different underlying communication technology (e.g.: ATM based, IP based, etc.), can be coded according to the same or different communication protocol (e.g.: SIP, H.323, etc.), and can involve the intervention of other server entities not shown in Fig. 1 (such as DNS servers, signaling gateways, etc.).

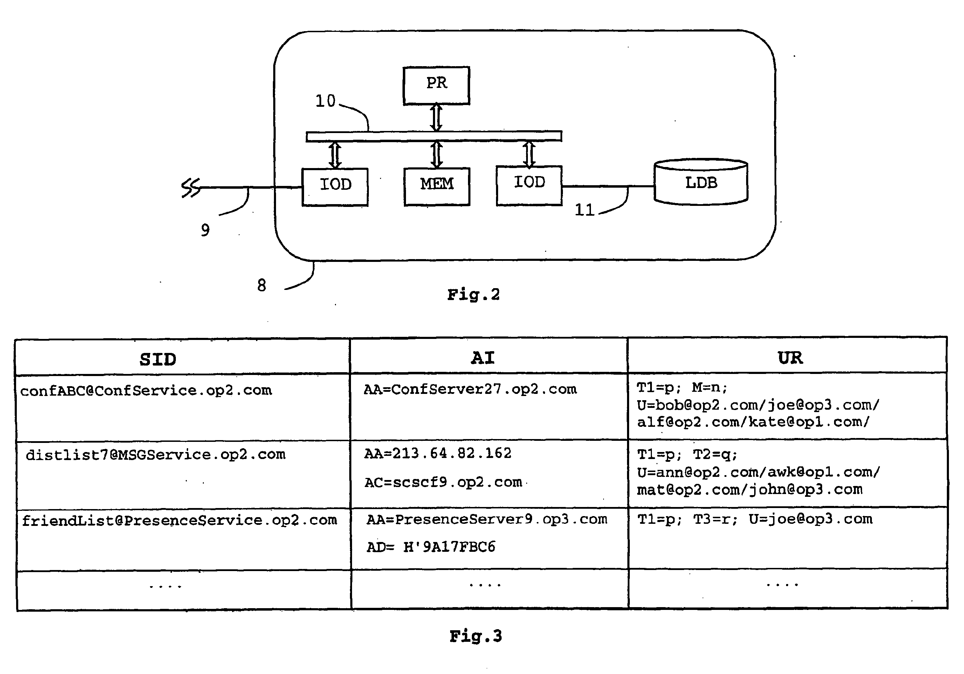

Fig.2 shows an schematic view of some functional elements in a state-of-the-art server entity (8), such as a CS, a LS or an AS. In general, a server entity in a telecommunications system comprise processing means which are arranged to exchange information (e.g.: sending and/or receiving signaling messages, queries, configuration information, control data, etc.) with other server entities in a telecommunications system, and to process it. Depending on the specific functionality performed by the server entity (8), said processing means can be arranged to perform various functions. For example, processing means in a CS can be arranged to receive signaling messages conveying requests, and further handle them; wherein said further handling can comprise the analysis of the content of a received message and also its subsequent routing towards another server entity or towards a user terminal, together with the achievement of addressing information when needed. In a LS its processing means can be arranged to receive location queries and/or service requests, and to answer back with (respectively) query responses and/or redirection indications containing the corresponding addressing information usable for routing.

For these purposes (and assuming the server entity 8 is implemented within a computer based machine), the processing means can comprise a processor (PR) and a memory (MEM) storing the processing instructions to be executed by the processor (PR), as well as one or more communication devices (IOD) for sending or receiving said signaling and for exchanging other kind of information with other entities or devices through communication lines (9,11). One or more internal buses (10) can be provided to allow internal exchange of data between the processing elements (PR,MEM,IOD) depicted in the server entity (8) of Fig.2.

For the storage of data which may be needed when processing received requests, queries, etc, data storage means (LDB) can also be provided in a server entity (8). Thus, for example, said data storage means can contain a list of bindings between user and/or service identifiers and the corresponding addressing information for each of these identifiers. Since the volume of information to be stored can be high, the storage means can be externally allocated (e.g.: in a dedicated storage server to which server entity 8 access through communication line 11, such as a location service data base) or co-located within the same machine implementing the server entity (8). In the latest case, the same storage means can be arranged to store both: the processing instructions and the binding identifiers-addressing information mentioned above.

In a telecommunications system as described heretofore with reference to Fig. 1, a signaling message conveying a service request from a terminal, before it gets to the corresponding application server entity (AS), can pass through one or various communication server entities (CS), and can involve the intervention of one or more location server entities (LS). Thus, for example, the service request can pass through a first CS serving the access of the requesting terminal (e.g.: CS1), a second CS serving the access of the AS (e.g.: CS3), and a third CS (e.g.: CS2) acting as transit between CS1 and CS3. Although it can involve only the intermediation of only one CS, for example, in case said CS is serving both: the requesting user terminal and the AS.

According to the invention, a usage rule (UR) can be utilized to block a service request before it gets the AS which hosts the service logic to attend said request, by neglecting or granting the usage of the addressing information AI necessary to route said service request; thus preventing an undesired, unauthorized or unseasoned access to a service.

Depending on implementation details, a service-ID can be defined by the AS, by a user, or in combination. For example, in a service-ID such as "*FriendList4@PresenceService.op2.com*", the part "*FriendList4*" can be defined by the user, and the part "*PresenceService.op2.com*" be defined by the AS. In any case, the whole service-ID is basically intended to be unique so as to allow to distinguish a specific service, or a specific service instance of a service, in the corresponding AS. Thus, a usage rule (UR) according to the invention can be defined to control the access to the service it relates and structured (as will be later detailed) so as to monitor one or a plurality of aspects related to said service which can make its execution suitable or unsuitable to be invoked.

Preferably, a usage rule UR is defined per service-ID, although other embodiments are also possible in which the same UR can apply to more than one service-ID (e.g.: to different service-IDs of different services, to all service-IDs related to the same service type, etc.).

Although a usage rule can be defined in connection with a service-ID, it can be stored in relationship with a service-ID and/or with the corresponding addressing information AI for said service-ID; thus, depending on storage implementation details, a UR can be stored either: directly or indirectly related with a service-ID and its corresponding AI. Fig.3 shows an illustration of a possible storage structure (SID,AI,UR) which contains, as an example, three different service-IDs (SID column) in relationship with their corresponding addressing information (AI column) and usage rules (UR column).

A location server entity (LS) can thus store a data structure as in Fig.3 which comprises also UR. Similarly, since some CSs can also store location information (e.g.: previously cited features of CSs dealing with off-line building of routing tables, cache of location information, involvement in a registration process, etc.), the data structure of Fig.3 can also be stored in a CS.

Some embodiments related to the possible structure and function of the usage rule UR shall now be given with reference to the example case illustrated in Fig.3.
It shall be understood that, according to the granularity desired to prevent unsuitable service requests to arrive to an application server entity for a given service, the corresponding UR to be checked can contain one or more use conditions (T1, T2 ,T3 ,M ,U) stating each a particular requirement for a service request to progress towards its destination. The use conditions (T1, T2, T3, M, U) defined in a given UR shall preferably cover the dynamic/temporary nature of the service it relates and, therefore, the dynamic/temporary nature of the corresponding service-ID. Accordingly, the use conditions structuring a given UR can preferably cover factors such as: the time when a given service can (or should) be provided, the time when said service can not (or should not) be provided, the maximum time that can elapse since said service can be provided from its first provision, the maximum number of times that said service can be provided, the user (or users) who are allowed to request said service, etc; and combinations thereof. Therefore, in a preferred embodiment, an UR for a given service is distributed by an application server entity to further server entities which can intervene in the signaling of a service request related to said service (e.g.: distributed to LSs and/or CSs). Also, in a preferred embodiment, the UR (or a part of its use conditions) can be determined in the application server AS based on dynamic and/or temporary conditions known by the AS (e.g.: its present traffic load, the suitability to provide a given service in a given time period, etc.), as well as in permanent ones.

Preferably, a service request shall progress towards its destination only if all the use conditions stated in the corresponding usage rule UR for the service-ID it contains are fulfilled. Other embodiments are also possible wherein, for example, upon failure on the checking of a use condition of a UR, other actions different from the service rejection can be performed, such as the use of only a certain addressing element among a plurality of addressing elements that, as will be later detailed, can be stored in the addressing information for said service-ID.

The first service-ID depicted in Fig.3 can relate to a dial-in conference which is identified by the service-ID "*confABC@ConfService.op2.com*". Its corresponding UR states, as illustrated: a "first time" condition (T1), a "requesting user" condition (U), and a "maximum usage" condition (M); which, respectively, can be used to control: a start-time (e.g.: "p") from which said service can be provided, the identifier of the user or users who can request said service (e.g.: user-IDs such as *"bob@op2.com", "joe@op3.com", "alf@op2.com", "kate@opl.com*")*,* and the number of times a service request can be sent for said service (e.g.: "n" times) . Thus, according to this example case, starting from the time and/or date determined by the content of the start time condition T1, any of the users listed under the requesting user condition U ("*bob@op2.com*"*, "joe@op3.com", "alf@op2.com", "kate@op2.com*") can send service request for joining the dial-in conference.

The maximum usage condition M could be redundant in some cases wherein, as in the dial-in conference example cited above, the maximum usage of a given service can be implicitly limited by the number of users authorized to send service requests (e.g.. 4 users in the example case cited for the dial-in conference above). However, it can be useful for cases wherein no requesting user condition (U) has been set, or for cases wherein U has been set for a wide list of users who can tentatively join or delegate in another listed user. In any case, M can be used to determine the number of times a service request containing the service-ID to which it relates can progress towards the corresponding application server entity (AS); therefore, it can advantageously be used to pre-determine a maximum use of a given service depending, for example, on the fee paid (or to be paid) for accessing the service, on the resources in an AS dedicated for a given service, on the relevance and/or suitability of providing a service more than a given number of times, etc.

For a given usage rule UR, the requesting user condition U can store one or more user-IDs of one or more users, being said user-ID(s) stored in any well-known format (e.g.: URI, E.164, h323-ID, etc). The identity of the user which sends a service request can be obtained from the signaling message conveying request itself and can be included, together with the received service-ID, within a subsequent location query which is sent to further route said request; for example: it can be obtained from the "*from*" header in a service request coded according to SIP, or from the parameters "*sourceAddress*" or "*Calling Party Number*" in a service request coded according to ITU-T recommendation H.225.0. Accordingly, since, as mentioned earlier, some users can have a plurality of user-IDs assigned in a telecommunications system, preferably a requesting user condition U of a given usage rule UR stores the plurality of user-IDs of a given user which is intended to be listed in said requesting user condition U.

The time information stored in the first time condition T1 can vary depending on the desired accuracy for the start-time it controls. For example, T1 can contain a time-and-date value form (e.g.: day/month/year:time) which would determine a given time in a given date; wherein the precision can be established according to the minimum time unit stored (e.g.: hour, minute, etc.). Similarly, T1 can contain only a date value (e.g.: 23/12/2003); thus allowing any moment in that date for start requesting the service it relates. Also, it can contain only a time value (e.g.: 14:00) which sets up an start-time, regardless of the day, from which said service can be provided. The time information stored in T1 can also contain a plurality of values, each stating different time/date values, thus allowing set up different start-times for different dates.

The second service-ID in Fig.3 ("*distlist7@MSGService.op2.com*") can relate to an Instant Messaging service for message distribution. Conditions T1 and U have the same meaning as described above for the first service-ID, while for this case the usage rule (UR) also comprises a "second time" condition (T2) which controls a stop-time (e.g.: "*q*") from which said service shall not be provided. Thus, according to the example case shown for this service, it can be provided for the users listed in U ("*ann@op2.com*", "*awk@op1.com*", "*mat@op2.com*", "*john@op3.com*"), so as to allow any of them to send a service request containing the service-ID above that will make an "instant message" to be sent to the user/users who has/have been defined in the corresponding distribution list; wherein service requests from said users would be allowed to be received starting, as soonest, at "*p*" and ending, as latest, at "*q*".

It shall be noticed that the second time condition T2, whose content and accuracy can be set up as described earlier for the first time condition (T1), can work independently of said first time condition; thus, allowing to stop service request for a given service at a given stop-time, regardless any pre-defined start-time.

The third service-ID in the example case shown in Fig.3 ("*friendList@PresenceService.op2.com*") can relate to a Presence service so as to provide to a watcher user presence information related to a list of users. The start-time condition T1 have the same meaning as described above for the first or second service-ID exemplified in Fig.3. In this example case, the requesting user condition U contains the user-ID of only one user ("*joe@op3.com*"), since, given the nature of the service, it can be appropriate that only the user who has subscribed the Presence service and defined the user (or users) which he wants to obtain presence information from, is entitled to send the subsequent service requests. In this case, the usage rule (UR) further comprises a "third time" condition (T3) which controls the maximum time gap for accepting service requests for said service, from the first time it is requested. Thus, in this example case, the user listed in the requesting user condition U ("joe@op3.com") can send service requests containing the aforementioned service-ID ("*friendList@PresenceService.op2.com*") starting at the time/date determined by T1 ("*p*"); wherein the service will no longer be provided for said service-ID after a given time, determined by T3 ("r"), starting from the first service request.

According to various implementation alternatives, the accuracy of the time gap determined by the third time condition T3 can be adjusted accordingly. For example, the value of T3 can be represented by an integer value, wherein its precision can depend on the time unit (e.g.: days, hours, minutes, etc.) said integer represents.

For a given usage rule UR which contains a time condition T1 and/or T2, a server entity which checks said condition (e.g.: a LS or a CS) will have to be provided with time-date means arranged to keep an updated value representing the actual time and/or date; so, when time conditions specified T1 and/or T2 of a usage rule UR have to be checked in a given moment, the actual time represented in said time-date means can be compared with any of said time conditions, and thus, determine if the service request which triggered said check in said moment can progress or not towards its corresponding destination AS. As in many of the well-known computer based apparatuses (such as personal computers), time-date means are commonly implemented in most of the server entities of a telecommunications system for various purposes, such as time-stamping of messages, logging of events, etc; wherein said time-date means can rely on an internal clock within the server entity and/or time/date signals received from a further entity. Thus, according to the invention, only the processing means of a location server LS or a communication server CS which already implements said time-date means needs to be further arranged to compare the time and/or date represented on said time-date means with the time and/or date stated by a time condition (T1 and/or T2) of a usage rule UR.

Similarly, for a given usage rule UR which contains a third time condition T3, a server entity which checks said condition (e.g.: a LS or a CS) is arranged according to the invention to monitor the time elapsed since a UR containing said third time condition T3 is checked in said server for the first time (which can imply the first service request containing the service-ID to which the UR relates to), until a further checking take place. Various implementation alternatives can be selected to achieve this feature. For example, the first time the server entity checks any of the conditions of a UR, it stores in relationship with said UR a time-stamp containing the current time of said checking; wherein said time-stamp can contain day, hour, minute, etc, according to the desired accuracy considerations mentioned earlier. Then, when a subsequent checking over condition T3 of said UR takes place, a comparison can be performed between the time elapsed (i.e.: current time minus the time stated in the time-stamp) and the maximum time stated by T3.

Alternatively, a clock-controlled counter can be utilized. When the first check over a UR takes place, said counter can be set to a zero value or to its maximum value, and then, alternatively, incremented or decremented as the time elapses. This can be achieved, for example, with a time-related processing routine which is started periodically and which, among other possible actions, increment or decrement the value of said counter. Accordingly, a subsequent checking over the condition T3 of said UR is accomplished either: by comparing the actual counter value with the value stored in T3 (in case of initial zero setting of the counter), or by checking that the counter value is not zero (in case of initial maximum value setting of the counter). The option in which the counter is periodically decremented according to the elapsed time allows to implement the counter within the same storage area which stores the value T3 of a UR; thus, in a given moment, the value stored in the T3 field of a UR would state the "remaining time" which left for accepting a service request containing the service-ID said UR relates to.

In order to control the maximum usage condition (M) of a usage rule UR, a similar technique as the alternative cited above for T3 can be implemented by implementing a counter which can be set to zero and incremented with each checking until it gets its maximum value, or decremented with each checking from its maximum value to zero. Also, as cited above in relationship with the decrementing counter option of T3, the value of M can be directly decremented with each checking, thus avoiding the need of an additional counter for M. Accordingly, when the M value of a UR is going to be checked, it can be first verified if its value is different from zero. If it is not zero, then M shall be decremented. Advantageously, the M condition of a UR is checked the last in case of other conditions (T1 T2, T3, U) exists for said UR; so, it is only decremented (or incremented) if all the conditions stated in the UR are satisfied.

As cited earlier, the location information stored in a location server LS or in a communication server CS comprises an identifier and the corresponding addressing information AI for routing a service request which contains said identifier. The nature of an element stored as AI can vary according to different addressing implementations and addressing options in a telecommunications system. The example shown in Fig.3 considers some of them which have been noted as "AA" (an address of an application server AS), "AC" (an address of a communication server CS), and "AD" (an address-determining-capability that can be utilized to find a CS matching it, and which can further route a service request with said identifier towards its final destination). However, it shall be understood that the notation used in the figure (AA, AC, AD) does not necessarily imply that the nature of the stored addressing information needs to be coded together with the addressing information it relates so as to specify its type (e.g.: whether it is an address of an AS, or an address of a CS, or an address-determining-capability).

In Fig.3, for the dial-in conference service identified by the service-ID "*confABC@ConfService.op2.com*", the addressing information comprises (AA) a URI of the AS which is entitled to serve it, "*ConfServer27.op2.com*"*.* Thus, for example, the network operator "OP2" can have a plurality of ASs, wherein one of them (e.g.: aliased as "*ConfServer27*") has been assigned to serve the service identified by this service-ID.

The addressing information shown in Fig.3 for the Instant Messaging service identified by the service-ID "*distlist7@MSGService. op2. com*" contains two elements. The first one (AA) contains an IP-address of the AS assigned for said service, "*213.64.82.162*", and the second one (AC) is a URI of a communication server CS which can be the CS serving access to said AS, or can be a CS having the required capabilities to intervene in the signaling to/from said AS. The two addressing elements (AA, AC) shown in this example case, are given just to illustrate that, depending on various addressing alternatives, the addressing information stored for a service-ID can vary on its nature and even be multiple; thus allowing to select one of them and use it for routing the service request depending on addressing policies which can determine, for example, if a service request can be routed directly using an address of the concerned AS, or if it has to be first routed through a given CS, etc. In turn, said addressing policies can be dependent on factors such as the time of the date, the origin domain of the request, etc, and also (as mentioned earlier) be dependent on if a given use condition (T1, T2, T3, M, U) of the corresponding usage rule UR has not been fulfilled by the service request.

A further example of multiple addressing elements for the same service-ID is given for the Presence service identified by the service-ID "*friendList@PresenceService.op2.com*" in Fig.3. In this case, the corresponding addressing information AI comprises two addressing elements (AA,AD); wherein the first one (AA) contains a URI of the AS assigned to serve a request containing said service ID, "*PresenceServer9.op3.com*", and the second one (AD) contains the value of an address-determining-capability to select a communication server entity CS which can intervene in the signaling to/from said AS, which is shown as an hexadecimal representation of a 32 bits value "*H'9A17FBC6*" according to the *Unsigned32* coding stated in the aforementioned IETF-DRAFT "*Diameter Multimedia Application*" (*draft-belinchon-aaa-diameter-mm-app-00. txt*). It shall be understood that when an address-determining-capability is utilized to select a CS, a further processing is needed to determine an address of a CS from a specific *Unsigned32* value (e.g.: a look-up table matching CSs with unsigned 32-bits values). However, said further processing is beyond the scope of the present application.

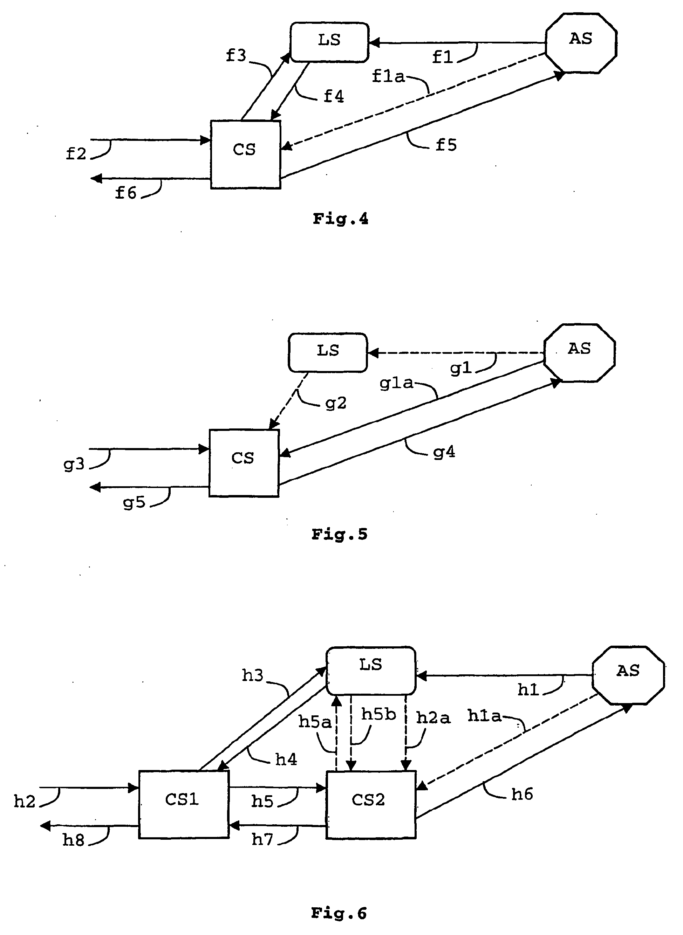

Some embodiments of the invention showing various routing cases of a service request, as well as the distribution and applicability of a usage rule UR according to the invention, shall now be described with reference to the signaling flows of figures 4 to 6. In all these figures, an application server entity (AS) has been entitled to process service requests related to a service identified with a given service-ID.

In the routing of a service request from the originating end-point towards the destination application server entity AS, there can be more server entities intervening (i.e.: intermediating in the signaling and/or providing addressing information) as the ones depicted in the routing cases shown in figures 4 to 6 (CS, CS1, CS2, LS). For example, the service requests which appears as first received in a communication server (CS, CS1) (flows f2 in Fig . 4 , g3 in Fig . 5 , h2 in Fig . 6), can come from another communication server (not shown). Similarly, the service request which appears finally to be sent directly to the AS from a communication server (CS,CS2), can be routed through a further communication server (not shown). However, for the sake of a greater clarity, only those server entities which are relevant to illustrate one aspect of the invention have been shown on each case.

In flow f1 of Fig.4, the AS sends location information which comprises one or more service-IDs and the corresponding addressing information for routing service requests containing said service-ID(s) to a location server entity (LS). As cited earlier, the addressing information can contain, for example, an address of an AS, and/or an address of a communication server entity (CS) which can intervene in the signaling towards said AS, or an address-determining-capability to determine an address of said CS.

The information sent in flow f1 can further comprise a usage rule UR to grant the usage of the received addressing information. For example, it can contain a UR for each of the indicated service-IDs, or a UR for more than one (or all) of the indicated service-IDs. According to various implementation alternatives, the UR can be sent from the AS to the LS within the same message as the addressing information, or in a separate message which, for example, can include the service-ID to correlate the UR with the service-ID it relates. This latest option allows to modify the UR of a given service, without changing any other data related to it (e.g.: service-ID or addressing information).

Flow f1a shows an optional embodiment wherein the AS sends a usage rule UR in relationship with the service-ID said UR relates to a communication server entity (CS). Since, as mentioned earlier, some CS can store addressing information so as to route a service request based on its own stored addressing information for a service-ID contained in said request (thus avoiding a further query to a LS), the information sent in flow f1a can comprise also the corresponding addressing information for the service-ID(s) received; wherein, as mentioned above for the LS, the location information for a given service (service-ID, addressing information) can be received in the CS together with the corresponding UR, or separately.

The content of a usage rule UR for a given service-ID can be determined according to various alternatives. For example, it can be determined automatically within a server entity (AS, LS, CS) (e.g.: according to tables which relate service-IDs, or a part of them, with the corresponding UR values). Also, in addition to the reception of a UR from an application server entity as explained above, a UR can be defined by other means in a LS and/or in a CS, such as by means of OAM (Operation, Administration, Maintenance) procedures; being this useful for cases for cases wherein the same UR can apply to a plurality of service-IDs.

According to the signaling flows shown in figures 4 to 6, the AS which intervene in the transmission of the UR towards a LS (or towards a CS) appears to be the same as the AS finally receiving the service requests (flows f5, g4, h6). However, other embodiments are also possible wherein, other server entity (such as an AS specially entitled for the distribution of URs) which is not the AS entitled to receive the corresponding service request, intervenes in the transmission of a UR (flows f1, f1a, g1, g1a, h1, h1a).

Flow f2 represents the reception of a service request containing a service-ID in the CS. Assuming that the CS has not stored previously addressing information for this service-ID, it sends a location query (flow f3) to the LS which contains the received service-ID. Alternatively, flow f3 can represent a forwarding of the service request received in the CS towards the LS; that could be the case wherein, for example, an unconditional routing is programmed within the CS (e.g.: for all the received requests or according to an identifier received in a request), and wherein the LS behaves as a redirect server. In either case, the LS then checks the usage rule UR which relates to the service-ID received and verifies if all the use conditions stated in said rule are fulfilled.

In case of a successful checking of the UR, the LS answers back in flow f4 to the CS (either: query response, or a redirection indication) with the corresponding addressing information which, as cited earlier, can be an address of the AS which shall receive said service request. Then, the CS, using said addressing information, forwards in flow f5 the received requests towards the AS.

If the check of the UR fails, then the negative result can be sent from the LS to the CS in flow f4; this can be accomplished, for example, by sending in f4 an empty value in the addressing information (or a predefined "default value"), and/or by indicating explicitly a negative result. The reception of a negative result would cause the received service request to be rejected back from the CS in flow f6 according to the utilized signaling protocol (e.g.: a *Request Failure* response "4XX" as defined in IETF-RFC3261 if SIP protocol is used an *INVITE* message was received, a RELEASE COMPLETE message H.225.0 protocol is used and a SETUP message was received, etc). Alternatively, as mentioned earlier, in case of failure when checking the UR (or any of its use conditions) other actions (not shown) different from the service rejection can be performed, such as to route the received service request through a given server entity (e.g.: a further CS, or a further AS). This can be accomplished by giving back in flow f4 an address element (AA, AC, AD) provided for said purpose.

Fig.5 shows an alternative embodiment wherein the usage rule UR is checked in a communication server CS which receives a service request. In Fig.5, flows g1 and gla are equivalents to, respectively, flows f1 and f1a previously described with reference to the embodiment illustrated in Fig.4, with the particularity that, as an option, in this embodiment the CS can receive the UR in relationship with the service-ID it relates and also in relationship with the corresponding addressing information from a LS, as represented by flow g2 which continues from flow g1. Accordingly, at reception of a service request in the CS (flow g3), the corresponding UR can be obtained internally in said CS and checked in said CS and, then either: forward the request towards the AS (flow g4) if the check is passed, or reject the service request otherwise (flow g5).

The embodiment shown in Fig.6 illustrates schematically the routing of a service request in an scenario which contains at least two communication server entities (CS1, CS2); although, as mentioned earlier, there could be more CSs (not shown) intermediating in the signaling of the service request. Fig.6 can also serve to illustrate partially the routing of a service request in an scenario which contains various communication server entities (CS1, CS2) having each different roles in said routing. An example of a routing scenario comprising various CSs having each different roles is described for the IP Multimedia Subsystem IMS of a 3rd. generation mobile system in the aforementioned 3GPP specification TS 23.228, which defines different roles for the CSCFs (Call State Control Functions). So, for example, Fig.6 can represent a part of the routing of a service request in the IMS relevant to illustrate the invention; wherein, communication server CS1 can represent a CSCF acting as an "*Interrogating-CSCF*" (I-CSCF) and communication server CS2 can represent a CSCF acting as a "*Serving-CSCF*" (S-CSCF), while the location server depicted in the figure can represent a "Home Subscriber Server" (HSS).

Flows h1 and h1a are similar to previously cited flows f1 and f1a (or g1 and g1a). In the specific case of the IP Multimedia Subsystem IMS, the transfer of information from the AS to the LS (flow h1) or to the CS2 (flow h1a), which comprises the transference of a usage rule UR, can take place according to the signaling defined in the 3GPP specification TS 29.328 (V5.2.1, Jan-2003) for the so called "*Sh interface*" (interface defined between a HSS and an AS), which can be extended to regard also communications between an AS and a CSCF according to the invention; while flow h2a (which, as equivalent flow g2, continues from flow h1 as an implementation option), can take place according to the signaling defined in the aforementioned 3GPP specification 29.228 for the so called "*Cx interface*" (defined between a HSS and a S-CSCF). In particular, the aforementioned 3GPP specifications TS 29.328 and TS 29.228 define a data model (referred in these specifications respectively as "*Sh-Data*" and "*IMS Subscription*") that contains profile data associated to a user and which can be transferred to the S-CSCF assigned to serve said user through the *Cx interface.* Advantageously, profile data can also be (independently of the user profile data of any user) associated to a given service (e.g: associated to a service-ID of said service), or even to the profile data associated to an application server entity AS (e.g.: for some or all the service-IDs of the services it hosts), and be also transferred (e.g.: via *Sh interface*) to a HSS storing location information for a given service hosted in an AS, and/or transferred (e.g.: via *Sh interface* or *Cx interface*) to a S-CSCF assigned to serve signaling to/from said AS.

Accordingly, in the specific case of the IP Multimedia Subsystem IMS, a usage rule UR can be for example stored in a HSS (LS) and/or in a S-CSCF (CS2), either or both: as a part of profile data related to a given user, or as a part of profile data related to a given service (or AS), which would comprise, together with the relevant profile data according to the data model disclosed in the aforementioned 3GPP specifications TS 29.328 and TS 29.228, a usage rule UR according to the invention. In the first case (i.e.: UR as a part of the profile data related to a given user), the UR can be checked in the S-CSCF assigned to serve signaling to said user when it receives a service request from him (i.e.: checked in a CS as in the embodiment described in Fig.5 that, for the present case, could represent the S-CSCF assigned to said user on his registration in the IMS). In the second case (i.e.: UR as a part of the profile data related to a given service), the UR can be checked when the S-CSCF assigned to serve signaling to said AS receives (or is going to receive) a service request for a service which is hosted in said AS; wherein said checking can take place either: in said S-CSCF, or in the HSS when it receives a location query with the concerned service-ID.

Whether the usage rule UR of a given service-ID is associated to the profile data of a given user and/or to the profile data associated to a given service-ID, is an implementation option which can be selected according to the type of service said service-ID relates. For example, for a service-ID which identifies a service intended to be used only by a given user (such as the service-ID which identifies a Presence service for a given watcher user), it can be advisable to associate a UR to the user profile data of said user; if, on the other hand, the service-ID relates to e.g. a public messaging list, it can be advantageous to define independently for said service-ID the corresponding profile data. However, these alternatives does not preclude that, for a given service-ID, various usage rules are defined which are associated to the profile data of a plurality of users, as well to a profile data independently defined for said service-ID.

If the UR is transferred from the AS to the LS (flow h1), the LS can, as an implementation option, further transfer it to the communication server entity CS2, as it is shown by alternative flow h2a. This, as previously cited in reference to the embodiment illustrated in Fig.5, can avoid further signaling between CS2 and LS by performing an early checking of the UR in CS2.

As in equivalent flows of figures 4 or 5, flow h2 represents the arrival of a service request to a communication server entity (CS1). When the service request arrives to CS1, it sends (flow h3) a location query to the LS which comprises the received service-ID. As in flow f3 in Fig.3, flow h3 (as well as further flow h5a) can also represent the forwarding of the received service request to a LS acting as redirect server. At this point, the LS can check the UR which corresponds to said service-ID and, according to said check, give back in flow h4 the corresponding addressing information, or (as described earlier with reference to Fig.4) a negative result which would make CS1 to answer back with a service rejection (flow h8). In case of a successful checking of the UR, the LS can give back an address of a further communication server entity (CS2) and use it to route the received service request (flow h5).

In the particular case of the IMS, flow h2 can represent the arrival of a service request to an I-CSCF (CS1) of the network operator which governs the access to the application server entity AS, and flows h3/h4 would represent the subsequent "*Cx-Location-Query"l"Cx-Location-Query Resp*" for obtaining addressing information usable for routing the received request. Thus, if the check of the corresponding UR is passed, the HSS (LS) can give back an address of a S-CSCF (CS2) which can be the one assigned to serve signaling to/from the concerned application server entity (AS).

Various alternative actions can take place when the service request arrives to CS2 (flow h5) depending, among other factors, on if the communication server CS2 has stored a usage rule UR which corresponds to the service-ID contained in the service request it receives in flow h5 (e.g.: if flows h1a or h2a took place). For example, if CS2 has the corresponding UR, it can act as described earlier with reference to Fig.5, and either: reject back the service request (flow h7, which would continue with flow h8) if the check is not passed, or further route it towards the AS (flow h6) if the check is passed. Alternatively, if CS2 does not have a UR in relationship with the received service-ID, it can, for example: further route the service request towards its destination AS (e.g.: the UR can have been checked earlier) using addressing information it can have stored for the received service-ID (e.g.: from flow h2a), or send a location query to a LS (flow h5a) to obtain addressing information. In this latest case, if the corresponding. UR is stored in the location server LS receiving the query (which, although shown as the same as the LS receiving the location query h3, can be a different LS), it can be checked there before providing back the addressing information in response to said location query (flow h5b).

In the specific case of IMS, flows h5a and h5b can respectively represent server assignment request/answer operations by which, a S-CSCF that receives a service request (CS2) containing a service-ID for which it does not have yet stored its corresponding addressing information, requests and obtains addressing information from the HSS and states that it (CS2) gets assigned to serve signaling towards the entity addressed by said addressing information. In the IMS, said server assignment request/answer operations related to services can be accomplished by operations similar to *"Cx-Put*/*Resp"* and *"Cx-Pul1*/*Resp"* operations described in 3GPP specification 29.228, which would include the service-ID concerned (in the request, h5a) and the appropriate addressing information usable for routing towards the AS entitled to serve the service identified by said service-ID (in the response, h5b); wherein the usage rule UR can, either: be checked in the HSS before providing back to CS2 the addressing information for the AS, or included together with said addressing information (e.g.: if, according to the selected implementation the UR if not received previously in CS2 in flows h1a or h2a). Therefore, it should be understood that flows h2a or h1a, and flows h5a and h5b, can represent two different alternative implementation options to assign a S-CSCF (CS2) to serve signaling to the concerned AS for a service-ID, and to provide said S-CSCF with the corresponding addressing information and/or usage rule UR; wherein, in the first alternative option (flows h2a or h1a), the UR can be checked in the S-CSCF, while the second alternative option (flows h5a-h5b) allows both: to download (h5b) the UR in the S-CSCF to be further checked there, or to check the UR in the HSS (at reception of flow h5a) before providing the corresponding addressing information (flow h5b).

Before getting into the point of the routing represented by flow h2, the service request can have passed earlier through other(s) communication server entity(ies) CS(s) (not shown in Fig.6), so that the service request can have been checked against the corresponding UR before route it further (either, in an earlier CS or in an earlier LS - not shown in Fig.6- which can have provided addressing information to get CS1). For example, if the requesting user is connected to the IMS, the service request has passed previously through the S-CSCF which was assigned to him during his registration in the IMS before it gets the S-CSCF assigned to the concerned AS. Thus, a more complete picture of a possible routing flow, as well as of the possible embodiments concerning the distribution and applicability of the UR, can be understood starting from the signaling flows depicted in the embodiments of figures 4 or 5, and continuing with the signaling flow depicted in the embodiment of Fig.6; wherein the latest flow shown in Fig.4 (i.e.: flow f5 before getting the AS), or the latest flow shown in Fig.5 (i.e.: flow g4 before getting the AS), should correspond to flow h2 in Fig.6. Consequently, before a service request gets the corresponding AS, it can have been checked against the corresponding UR one or more times as said request passes through various CSs (e.g.: when it gets A CS assigned to serve to the requesting user, a transit CS, a CS assigned to serve the AS, etc.), thus allowing to stop undesired signaling traffic towards said AS at different routing phases.

It shall be noticed that, for any of the embodiments described with reference to figures 4 to 6, a communication server (CS, CS1, CS2) can store a usage rule in relationship with a service-ID independently of whether it also stores or not the corresponding addressing information for said service-ID; thus further unnecessary signaling for requesting addressing information (if needed) to a LS can be avoided if the UR is first checked at reception of a service request.

Modern server entities in a telecommunications system are commonly implemented in computer based machines. Accordingly, computer programs having computer-readable program codes are commonly loaded in a server entity (e.g.: a CS, a LS, an AS) of a telecommunications system, causing said server entity to behave according to a predefined manner which is in accordance to its specific functionality. Thus, those skilled in creating and/or modifying computer programs intended to be loaded in a computer-based server entities, would, without departing of the teachings of the present invention, apply those teachings to create and/or modify computer programs which, when executed in a computer-based communication server (CS), location server (LS) or application server (AS), would make them to behave according to any of the described embodiments.

The invention has been described in respect to some exemplary embodiments in an illustrative and non-restrictive manner. Variations can be readily apparent to those of ordinary skill in the art. For this reason, the invention is to be interpreted and limited in view of the claims.

## Claims

1. A method for routing in a telecommunications system a service request related to a service, comprising the steps of:
- receiving (f2,g3,h2,h5) in a communication server entity (CS,CS1,CS2) a service request containing a service identifier (SID) which identifies said service,
- obtaining (f3-f4, h3-h4, h5a-h5b, g2) addressing information (AI) related to said service identifier, and
- routing (f5, g4, h5, h6) said service request using said addressing information;
- checking a usage rule (UR) which grants the usage of said addressing information,
wherein the usage rule comprises at least one use condition selected from:
- a time condition (T3) determining the maximum time gap for using said addressing information from the first time it is used,
- a maximum usage condition (M) determining the number of times said addressing information can be used,
and wherein the step of routing said service request is performed if said check is passed.

2. The method of claim 1, wherein said usage rule further comprises at least one use condition selected from:
- a first time condition (T1) determining a start time for using said addressing information,
- a second time condition (T2) determining a stop time for using said addressing information,
- a requesting user condition (U) stating at least one user identifier of at least one user and determining that said user is authorized to use said service.

3. The method of claim 1, wherein said addressing information comprises at least one elementselected from:
- an address (AA) of an application server entity (AS) which hosts said service,
- an address (AC) of a communication server entity (CS2) which can intervene in the routing of a service request containing said service identifier,
- an address-determining-capability (AD) usable to determine an address of a communication server entity (CS2) which can intervene in the routing of a service request containing said service identifier.

4. The method of any of claims 1 to 3, further comprising the previous step of:
- storing in a location server entity (LS) said service identifier, said addressing information, and said usage rule.

5. The method of claim 4, further comprising the previous step of:
- receiving (f1, g1, h1) said usage rule in said location server entity from an application server entity (AS).

6. The method of claims 4 or 5, wherein the step of checking said usage rule is performed in said location server entity.

7. The method of claim 6, wherein the step of obtaining addressing information comprises the steps of:
- sending (f3,h3,h5a) from said communication server entity a location query containing said service identifier to said location server entity, and
- receiving (f4,h4,h5b) a query response in said communication server entity containing said addressing information if said check is passed.

8. The method of claim 6, wherein the step of obtaining addressing information comprises the steps of:
- transmitting (f3,h3,h5a) from said communication server entity said received service request to said location server entity, and
- receiving (f4,h4,h5b) a redirection indication in said communication server entity containing said addressing information if said check is passed.

9. The method of any of claims 1 to 3, further comprising the previous step of:
- storing in said communication server entity (CS,CS2) said service identifier, and said usage rule.

10. The method of claim 9, further comprising the previous step of:
- receiving (g2,h2a) said usage rule in said communication server entity from a location server entity.

11. The method of claim 9, further comprising the previous step of:
- receiving (f1a,g1a,h1a) said usage rule in said communication server entity from an application server entity.

12. The method of any of claims 9 to 11, wherein the step of checking said usage rule is performed in said communication server entity.

13. A location server entity (LS) having:
- storage means, arranged to store addressing information (AI) related to a service identifier (SID) which identifies a service, and
- processing means, arranged to access said storage means to provide said addressing information,
wherein:- said storage means further store a usage rule (UR) for granting the use of said addressing information, and
- said processing means are further arranged to check said usage rule to determine whether or not said addressing information can be provided;
**CHARACTERIZED in that** the usage rule comprises at least one use condition selected from:
- a time condition (T3) determining in said location server entity the maximum time gap for providing said addressing information from the first time it is provided from said location server,
- a maximum usage condition (M) determining in said location server entity the number of times said addressing information can be provided from said location server entity,
wherein said processing means are arranged to check at least one of said conditions.

14. The location server entity of claim 13, wherein said usage rule further comprises at least one use condition selected from:
- a first time condition (T1) determining in said location server entity a start time for providing said addressing information,
- a second time condition (T2) determining in said location server entity a stop time for providing said addressing information,
- a requesting user condition (U) stating at least one user identifier of at least one user and determining in said location server entity whether said user is authorized to use said service;
and wherein said processing means are further arranged to check at least one of said conditions.

15. The location server entity of claim 13, wherein said addressing information comprises at least one element selected from:
- an address (AA) of an application server entity (AS) which hosts said service,
- an address (AC) of a communication server entity (CS2) which can intervene in the routing of a service request containing said service identifier,
- an address-determining-capability (AD) usable to determine an address of a communication server entity (CS2) which can intervene in the routing of a service request containing said service identifier.

16. The location server entity of any of claims 13 to 15, further arranged to receive and store a usage rule in relationship with a service identifier.

17. The location server entity of claim 16, further arranged to receive said usage rule from an application server entity.

18. The location server entity of any of claims 13 to 17, further arranged to transmit a usage rule in relationship with a service identifier to a communication server entity which can intervene in a service request containing said service identifier.

19. The location server entity of any of claims 13 to 17, further arranged to receive a location query containing said service identifier and to answer with a query response containing said addressing information if said check is passed.

20. The location server entity of any of claims 13 to 17, further arranged to receive a service request containing said service identifier and to answer with a redirection indication containing said addressing information if said check is passed.

21. A communication server entity (CS,CS1,CS2) having processing means arranged to:
- receive a service request containing a service identifier (SID) which identifies a service,
- obtain addressing information (AI) related to said service identifier, and
- route a received service request using said addressing information,
- obtain a usage rule (UR) for granting the use of said addressing information, and
- check said usage rule to determine whether or not to route a received service request containing said service identifier;
**CHARACTERIZED in that** the usage rule comprises at least one use condition selected from:
- a time condition (T3) determining in said communication server entity the maximum time gap for routing service requests containing said service identifier from the first time a service request containing said service identifier has been routed from said communication server entity,
- a maximum usage (M) condition determining in said communication server entity the number of times it can route service requests containing said service identifier,
wherein said processing means are arranged to check at least one of said conditions.

22. The communication server entity claim 21, wherein said usage rule further comprises at least one use condition selected from:
- a first time condition (T1) determining in said communication server entity a start time for routing service requests containing said service identifier,
- a second time condition (T2) determining in said communication server entity a stop time for routing service requests containing said service identifier,
- a requesting user condition (U) stating at least one user identifier of at least one user and determining in said location server entity whether said user is authorized to send a service request containing said service identifier;
and wherein said processing means are further arranged to check at least one of said conditions.

23. The communication server entity of claims 21 or 22, further arranged to send a location query to a location server to obtain said addressing information and said usage rule.

24. The communication server entity of claims 21 or 22, further comprising storage means arranged to store said usage rule in relationship with said service identifier, wherein said processing means are further arranged to obtain said usage rule from said storage means.

25. The communication server entity of claim 24, further arranged to receive said usage rule from a location server entity and to store it in said storage means.

26. The communication server entity of claim 24, further arranged to receive said usage rule from an application server entity and to store it in said storage means.

27. An application server entity (AS) having processing means arranged to exchange information with a second server entity (LS,CS,CS2) which can intervene in the signaling of a service request related to a service; said processing means being further arranged to send to said second server entity a usage rule (UR) in relationship with a service identifier (SID) for granting the use of the addressing information (AI) usable for routing a service request containing said service identifier,
**characterized in that** the usage rule comprises at least one use condition selected from:
- a time condition (T3) determining the maximum time gap for using said addressing information from the first time it is used,
- a maximum usage condition (M) determining the number of times said addressing information can be used.

28. A computer program for providing information for routing a service request containing a service identifier (SID) which identifies a service, comprising:
- a computer-readable program code for causing a computer-based location server to provide addressing information (AI) related to said service identifier;
- a computer-readable program code for causing said computer-based location server to check a usage rule (UR) which grants the usage of said addressing information to determine whether or not said addressing information can be provided,
**characterized in that** the usage rule comprises at least one use condition selected from:
- a time condition (T3) determining the maximum time gap for using said addressing information from the first time it is used,
- a maximum usage condition (M) determining the number of times said addressing information can be used, when said program is running on said server.

29. A computer program for routing a service request containing a service identifier (SID) which identifies a service, comprising:
- a computer-readable program code for causing a computer-based communication server to obtain addressing information (AI) related to said service identifier, and
- a computer-readable program code for causing said computer-based communication server to route the received service request using said addressing information;
- a computer-readable program code for causing said computer-based communication server to obtain a usage rule (UR) which grants the usage of said addressing information, and
- a computer-readable program code for causing said computer-based communication server to check said usage rule to determine whether or not to route a received service request containing said service identifier,
**characterized in that** the usage rule comprises at least one use Condition selected from:
- a time condition (T3) determining the maximum time gap for using said addressing information from the first time it is used,
- a maximum usage condition (M) determining the number of times said addressing information can be used, when said program is running on said server.

## Patentansprüche

1. Verfahren für das Routing einer Dienstanforderung in einem Telekommunikationssystem, die einen Dienst betrifft, welches die folgenden Schritte umfasst:
- Empfangen (f2, g3, h2, h5) einer Dienstanforderung, die eine Dienstkennung (SID) enthält, welche den Dienst kennzeichnet, in einer Kommunikationsservereinheit (CS, CS1, CS2);
- Beschaffen (f3-f4, h3-h4, h5a-h5b, g2) von Adressierungsinformationen (AI), welche sich auf die Dienstkennung beziehen, und
- Routing (f5, g4, h5, h6) der Dienstanforderung unter Verwendung der Adressierungsinformationen;
- Prüfen einer Verwendungsregel (UR), welche die Verwendung der Adressierungsinformationen gestattet,
wobei die Verwendungsregel wenigstens eine Verwendungsbedingung umfasst, die gewählt ist aus:
- einer Zeitbedingung (T3), die den maximalen Zeitabstand für die Verwendung der Adressierungsinformationen festlegt, gerechnet ab dem ersten Zeitpunkt, zu dem sie verwendet werden,
- einer Bedingung "maximale Verwendung" (M), welche die Anzahl festlegt, wie oft die Adressierungsinformationen verwendet werden können,
und wobei der Schritt des Routings der Dienstanforderung ausgeführt wird, falls die Prüfung erfolgreich war.

2. Verfahren nach Anspruch 1, wobei die Verwendungsregel ferner wenigstens eine Verwendungsbedingung umfasst, die gewählt ist aus:
- einer ersten Zeitbedingung (T1), die einen Anfangszeitpunkt für die Verwendung der Adressierungsinformationen festlegt,
- einer zweiten Zeitbedingung (T2), die einen Abbruchzeitpunkt für die Verwendung der Adressierungsinformationen festlegt,
- einer Bedingung "anfordernder Teilnehmer" (U), die wenigstens eine Teilnehmerkennung wenigstens eines Teilnehmers angibt und festlegt, dass dieser Teilnehmer berechtigt ist, den Dienst zu nutzen.

3. Verfahren nach Anspruch 1, wobei die Adressierungsinformationen wenigstens ein Element umfassen, das gewählt ist aus:
- einer Adresse (AA) einer Anwendungsservereinheit (AS), welche den Dienst hostet,
- einer Adresse (AC) einer Kommunikationsservereinheit (CS2), welche in das Routing einer Dienstanforderung, welche die Dienstkennung enthält, eingreifen kann,
- einer Adressenbestimmungs-Fähigkeit (AD), die verwendet werden kann, um eine Adresse einer Kommunikationsservereinheit (CS2) zu bestimmen, welche in das Routing einer Dienstanforderung, welche die Dienstkennung enthält, eingreifen kann.

4. Verfahren nach einem der Ansprüche 1 bis 3, welches ferner den folgenden vorangehenden Schritt umfasst:
- Speichern der Dienstkennung, der Adressierungsinformationen und der Verwendungsregel in einer Standortservereinheit (LS).

5. Verfahren nach Anspruch 4, welches ferner den folgenden vorangehenden Schritt umfasst:
- Empfangen (f1, g1, h1) der Verwendungsregel in der Standortservereinheit von einer Anwendungsservereinheit (AS).

6. Verfahren nach Anspruch 4 oder 5, wobei der Schritt des Prüfens der Verwendungsregel in der Standortservereinheit ausgeführt wird.

7. Verfahren nach Anspruch 6, wobei der Schritt des Beschaffens von Adressierungsinformationen die folgenden Schritte umfasst:
- Senden (f3, h3, h5a) einer Standortanfrage, welche die Dienstkennung enthält, von der Kommunikationsservereinheit an die Standortservereinheit, und
- Empfangen (f4, h4, h5b) einer Anfrageantwort in der Kommunikationsservereinheit, welche die Adressierungsinformationen enthält, falls die Prüfung erfolgreich war.

8. Verfahren nach Anspruch 6, wobei der Schritt des Beschaffens von Adressierungsinformationen die folgenden Schritte umfasst:
- Senden (f3, h3, h5a) der empfangenen Dienstanforderung von der Kommunikationsservereinheit an die Standortservereinheit, und
- Empfangen (f4, h4, h5b) einer Umleitungsangabe in der Kommunikationsservereinheit, welche die Adressierungsinformationen enthält, falls die Prüfung erfolgreich war.

9. Verfahren nach einem der Ansprüche 1 bis 3, welches ferner den folgenden vorangehenden Schritt umfasst:
- Speichern der Dienstkennung und der Verwendungsregel in der Kommunikationsservereinheit (CS, CS2).

10. Verfahren nach Anspruch 9, welches ferner den folgenden vorangehenden Schritt umfasst:
- Empfangen (g2, h2a) der Verwendungsregel in der Kommunikationsservereinheit von einer Standortservereinheit.

11. Verfahren nach Anspruch 9, welches ferner den folgenden vorangehenden Schritt umfasst:
- Empfangen (f1a, g1a, h1a) der Verwendungsregel in der Kommunikationsservereinheit von einer Anwendungsservereinheit.

12. Verfahren nach einem der Ansprüche 9 bis 11, wobei der Schritt des Prüfens der Verwendungsregel in der Kommunikationsservereinheit ausgeführt wird.

13. Standortservereinheit (LS), welche aufweist:
- Speichermittel, die so beschaffen sind, dass sie Adressierungsinformationen (AI) speichern, die sich auf eine Dienstkennung (SID) beziehen, welche einen Dienst kennzeichnet, und
- Verarbeitungsmittel, die so beschaffen sind, dass sie auf die Speichermittel zugreifen, um die Adressierungsinformationen bereitzustellen,
wobei: - die Speichermittel ferner eine Verwendungsregel (UR), um die Verwendung der Adressierungsinformationen zu gestatten, speichern, und
- die Verarbeitungsmittel ferner so beschaffen sind, dass sie die Verwendungsregel prüfen, um zu bestimmen, ob die Adressierungsinformationen zur Verfügung gestellt werden können oder nicht;
**DADURCH GEKENNZEICHNET, dass** die Verwendungsregel wenigstens eine Verwendungsbedingung umfasst, die gewählt ist aus:
- einer Zeitbedingung (T3), die in der Standortservereinheit den maximalen Zeitabstand für das Bereitstellen der Adressierungsinformationen festlegt, gerechnet ab dem ersten Zeitpunkt, zu dem sie von dem Standortserver bereitgestellt werden,
- einer Bedingung "maximale Verwendung" (M), welche in der Standortservereinheit die Anzahl festlegt, wie oft die Adressierungsinformationen von der Standortservereinheit bereitgestellt werden können,
wobei die Verarbeitungsmittel so beschaffen sind, dass sie wenigstens eine dieser Bedingungen prüfen.

14. Standortservereinheit nach Anspruch 13, wobei die Verwendungsregel ferner wenigstens eine Verwendungsbedingung umfasst, die gewählt ist aus:
- einer ersten Zeitbedingung (T1), die in der Standortservereinheit einen Anfangszeitpunkt für das Bereitstellen der Adressierungsinformationen festlegt,
- einer zweiten Zeitbedingung (T2), die in der Standortservereinheit einen Abbruchzeitpunkt für das Bereitstellen der Adressierungsinformationen festlegt,
- einer Bedingung "anfordernder Teilnehmer" (U), die wenigstens eine Teilnehmerkennung wenigstens eines Teilnehmers angibt und in der Standortservereinheit festlegt, ob dieser Teilnehmer berechtigt ist, den Dienst zu nutzen,
und wobei die Verarbeitungsmittel ferner so beschaffen sind, dass sie wenigstens eine dieser Bedingungen prüfen.

15. Standortservereinheit nach Anspruch 13, wobei die Adressierungsinformationen wenigstens ein Element umfassen, das gewählt ist aus:
- einer Adresse (AA) einer Anwendungsservereinheit (AS), welche den Dienst hostet,
- einer Adresse (AC) einer Kommunikationsservereinheit (CS2), welche in das Routing einer Dienstanforderung, welche die Dienstkennung enthält, eingreifen kann,
- einer Adressenbestimmungs-Fähigkeit (AD), die verwendet werden kann, um eine Adresse einer Kommunikationsservereinheit (CS2) zu bestimmen, welche in das Routing einer Dienstanforderung, welche die Dienstkennung enthält, eingreifen kann.

16. Standortservereinheit nach einem der Ansprüche 13 bis 15, welche ferner so beschaffen ist, dass sie eine Verwendungsregel in Verbindung mit einer Dienstkennung empfängt und speichert.

17. Standortservereinheit nach Anspruch 16, welche ferner so beschaffen ist, dass sie die Verwendungsregel von einer Anwendungsservereinheit empfängt.

18. Standortservereinheit nach einem der Ansprüche 13 bis 17, welche ferner so beschaffen ist, dass sie eine Verwendungsregel in Verbindung mit einer Dienstkennung an eine Kommunikationsservereinheit sendet, welche in eine Dienstanforderung, welche die Dienstkennung enthält, eingreifen kann.

19. Standortservereinheit nach einem der Ansprüche 13 bis 17, welche ferner so beschaffen ist, dass sie eine Standortanfrage empfängt, welche die Dienstkennung enthält, und mit einer Anfrageantwort antwortet, welche die Adressierungsinformationen enthält, falls die Prüfung erfolgreich war.

20. Standortservereinheit nach einem der Ansprüche 13 bis 17, welche ferner so beschaffen ist, dass sie eine Dienstanforderung empfängt, welche die Dienstkennung enthält, und mit einer Umleitungsangabe antwortet, welche die Adressierungsinformationen enthält, falls die Prüfung erfolgreich war.

21. Kommunikationsservereinheit (CS, CS1, CS2), welche Verarbeitungsmittel aufweist, die so beschaffen sind, dass sie:
- eine Dienstanforderung empfangen, die eine Dienstkennung (SID) enthält, welche einen Dienst kennzeichnet,
- Adressierungsinformationen (AI) beschaffen, die sich auf die Dienstkennung beziehen, und
- eine empfangene Dienstanforderung unter Verwendung der Adressierungsinformationen routen,
- eine Verwendungsregel (UR) zum Gestatten der Verwendung der Adressierungsinformationen beschaffen,
- die Verwendungsregel prüfen, um zu bestimmen, ob eine empfangene Dienstanforderung, welche die Dienstkennung enthält, geroutet werden soll oder nicht;
**DADURCH GEKENNZEICHNET, dass** die Verwendungsregel wenigstens eine Verwendungsbedingung umfasst, die gewählt ist aus:
- einer Zeitbedingung (T3), die in der Kommunikationsservereinheit den maximalen Zeitabstand für das Routing von Dienstanforderungen, welche die Dienstkennung enthalten, festlegt, gerechnet ab dem ersten Zeitpunkt, zu dem eine Dienstanforderung, welche die Dienstkennung enthält, von der Kommunikationsservereinheit geroutet wurde,
- einer Bedingung "maximale Verwendung" (M), welche in der Kommunikationsservereinheit die Anzahl festlegt, wie oft sie Dienstanforderungen, welche die Dienstkennung enthalten, routen kann,
wobei die Verarbeitungsmittel so beschaffen sind, dass sie wenigstens eine dieser Bedingungen prüfen.

22. Kommunikationsservereinheit nach Anspruch 21, wobei die Verwendungsregel ferner wenigstens eine Verwendungsbedingung umfasst, die gewählt ist aus:
- einer ersten Zeitbedingung (T1), die in der Kommunikationsservereinheit einen Anfangszeitpunkt für das Routing von Dienstanforderungen, welche die Dienstkennung enthalten, festlegt,
- einer zweiten Zeitbedingung (T2), die in der Kommunikationsservereinheit einen Abbruchzeitpunkt für das Routing von Dienstanforderungen, welche die Dienstkennung enthalten, festlegt,
- einer Bedingung "anfordernder Teilnehmer" (U), die wenigstens eine Teilnehmerkennung wenigstens eines Teilnehmers angibt und in der Standortservereinheit festlegt, ob dieser Teilnehmer berechtigt ist, eine Dienstanforderung, welche die Dienstkennung enthält, zu senden;
und wobei die Verarbeitungsmittel ferner so beschaffen sind, dass sie wenigstens eine dieser Bedingungen prüfen.

23. Kommunikationsservereinheit nach Anspruch 21 oder 22, die ferner so beschaffen ist, dass sie eine Standortanfrage an einen Standortserver sendet, um die Adressierungsinformationen und die Verwendungsregel zu erhalten.

24. Kommunikationsservereinheit nach Anspruch 21 oder 22, die ferner Speichermittel umfasst, die so beschaffen sind, dass sie die Verwendungsregel in Verbindung mit der Dienstkennung speichern, wobei die Verarbeitungsmittel ferner so beschaffen sind, dass sie die Verwendungsregel aus den Speichermitteln beschaffen.

25. Kommunikationsservereinheit nach Anspruch 24, die ferner so beschaffen ist, dass sie die Verwendungsregel von einer Standortservereinheit empfängt und sie in den Speichermitteln speichert.

26. Kommunikationsservereinheit nach Anspruch 24, die ferner so beschaffen ist, dass sie die Verwendungsregel von einer Anwendungsservereinheit empfängt und sie in den Speichermitteln speichert.

27. Anwendungsservereinheit (AS), welche Verarbeitungsmittel aufweist, die so beschaffen sind, dass sie Informationen mit einer zweiten Servereinheit (LS, CS, CS2) austauschen, welche in die Signalisierung einer Dienstanforderung, die einen Dienst betrifft, eingreifen kann; wobei die Verarbeitungsmittel ferner so beschaffen sind, dass sie an die zweite Servereinheit eine Verwendungsregel (UR) in Verbindung mit einer Dienstkennung (SID) zum Gestatten der Verwendung der Adressierungsinformationen (AI), die für das Routing einer die Dienstkennung enthaltenden Dienstanforderung verwendbar sind, senden,
**dadurch gekennzeichnet, dass** die Verwendungsregel wenigstens eine Verwendungsbedingung umfasst, die gewählt ist aus:
- einer Zeitbedingung (T3), die den maximalen Zeitabstand für die Verwendung der Adressierungsinformationen festlegt, gerechnet ab dem ersten Zeitpunkt, zu dem sie verwendet werden,
- einer Bedingung "maximale Verwendung" (M), welche die Anzahl festlegt, wie oft die Adressierungsinformationen verwendet werden können.

28. Computerprogramm zum Bereitstellen von Informationen für das Routing einer Dienstanforderung, die eine Dienstkennung (SID) enthält, welche einen Dienst kennzeichnet, welches umfasst:
- einen computerlesbaren Programmcode, um zu bewirken, dass ein computerbasierter Standortserver Adressierungsinformationen (AI) bereitstellt, welche die Dienstkennung betreffen,
- einen computerlesbaren Programmcode, um zu bewirken, dass der computerbasierte Standortserver eine Verwendungsregel (UR) prüft, welche die Verwendung der Adressierungsinformationen gestattet, um zu bestimmen, ob die Adressierungsinformationen zur Verfügung gestellt werden können oder nicht,
**dadurch gekennzeichnet, dass** die Verwendungsregel wenigstens eine Verwendungsbedingung umfasst, die gewählt ist aus:
- einer Zeitbedingung (T3), die den maximalen Zeitabstand für die Verwendung der Adressierungsinformationen festlegt, gerechnet ab dem ersten Zeitpunkt, zu dem sie verwendet werden,
- einer Bedingung "maximale Verwendung" (M), welche die Anzahl festlegt, wie oft die Adressierungsinformationen verwendet werden können,
wenn das Programm auf dem Server läuft.

29. Computerprogramm für das Routing einer Dienstanforderung, die eine Dienstkennung (SID) enthält, welche einen Dienst kennzeichnet, welches umfasst:
- einen computerlesbaren Programmcode, um zu bewirken, dass ein computerbasierter Kommunikationsserver Adressierungsinformationen (AI) beschafft, welche sich auf die Dienstkennung beziehen, und
- einen computerlesbaren Programmcode, um zu bewirken, dass der computerbasierte Kommunikationsserver die empfangene Dienstanforderung unter Verwendung der Adressierungsinformationen routet;
- einen computerlesbaren Programmcode, um zu bewirken, dass der computerbasierte Kommunikationsserver eine Verwendungsregel (UR) beschafft, welche die Verwendung der Adressierungsinformationen gestattet, und
- einen computerlesbaren Programmcode, um zu bewirken, dass der computerbasierte Kommunikationsserver die Verwendungsregel prüft, um zu bestimmen, ob eine empfangene Dienstanforderung, welche die Dienstkennung enthält, geroutet werden soll oder nicht,
**dadurch gekennzeichnet, dass** die Verwendungsregel wenigstens eine Verwendungsbedingung umfasst, die gewählt ist aus:
- einer Zeitbedingung (T3), die den maximalen Zeitabstand für die Verwendung der Adressierungsinformationen festlegt, gerechnet ab dem ersten Zeitpunkt, zu dem sie verwendet werden,
- einer Bedingung "maximale Verwendung" (M), welche die Anzahl festlegt, wie oft die Adressierungsinformationen verwendet werden können,
wenn das Programm auf dem Server läuft.

## Revendications

1. Procédé pour router dans un système de télécommunication une demande de service relative à un service, comprenant les étapes consistant à :
- recevoir (f2,g3,h2,h5) dans une entité de serveur de communication (CS,CS1,CS2) une demande de service contenant un identifiant de service (SID) qui identifie ledit service,
- obtenir (f3-f4,h3-h4,h5a-h5b,g2) une information d'adressage (AI) relative audit identifiant de service,
- router (f5,g4,h5,h6) ladite demande de service en utilisant ladite information d'adressage, et
- vérifier une règle d'utilisation (UR) qui autorise l'utilisation de ladite information d'adressage ;
dans lequel la règle d'utilisation comprend au moins une condition d'utilisation sélectionnée parmi:
- une condition temporelle (T3) déterminant le laps de temps maximal pour utiliser ladite information d'adressage à partir de la première fois qu'elle est utilisée,
- une condition d'utilisation maximale (M) déterminant le nombre de fois que ladite information d'adressage peut être utilisée,
et dans lequel l'étape de routage de ladite demande de service est effectuée si ladite vérification est passée.

2. Procédé selon la revendication 1, dans lequel ladite règle d'utilisation comprend en outre au moins une condition d'utilisation sélectionnée parmi:
- une première condition temporelle (T1) déterminant un temps de début pour utiliser ladite information d'adressage,
- une seconde condition temporelle (T2) déterminant un temps d'arrêt pour utiliser ladite information d'adressage,
- une condition d'utilisateur demandeur (U) spécifiant au moins un identifiant d'utilisateur d'au moins un utilisateur et déterminant que ledit utilisateur est autorisé à utiliser ledit service.

3. Procédé de la revendication 1, dans lequel ladite information d'adressage comprend au moins un élément sélectionné parmi:
- une adresse (AA) d'une entité de serveur d'application (AS) qui héberge ledit service,
- une adresse (AC) d'une entité de serveur de communication (CS2) qui peut intervenir dans le routage d'une demande de service contenant ledit identifiant de service,
- une capacité déterminant l'adresse (AD) utilisable pour déterminer une adresse d'une entité de serveur de communication (CS2) qui peut intervenir dans le routage d'une demande de service contenant ledit identifiant de service.

4. Procédé selon l'une quelconque des revendications 1 à 3, comprenant en outre l'étape précédente consistant à :
- mémoriser dans une entité de serveur de localisation (LS) ledit identifiant de service, ladite information d'adressage et ladite règle d'utilisation.

5. Procédé selon la revendication 4, comprenant en outre l'étape précédente consistant à :
- recevoir (f1,g1,h1) ladite règle d'utilisation dans ladite entité de serveur de localisation en provenance d'une entité de serveur d'application (AS).

6. Procédé selon les revendications 4 ou 5, dans lequel l'étape de vérification de ladite règle d'utilisation est effectuée dans ladite entité de serveur de localisation.

7. Procédé selon la revendication 6, dans lequel l'étape consistant à obtenir l'information d'adressage comprend les étapes consistant à :
- envoyer (f3,h3,h5a) à partir de ladite entité de serveur de communication une interrogation de localisation contenant ledit identifiant de service vers ladite entité de serveur de localisation, et
- recevoir (f4,h4,h5b) une réponse d'interrogation dans ladite entité de serveur de communication contenant ladite information d'adressage si ladite vérification est passée.

8. Procédé de la revendication 6, dans lequel l'étape consistant à obtenir l'information d'adressage comprend les étapes consistant à :
- transmettre (f3,h3,h5a) à partir de ladite entité de serveur de communication ladite demande de service reçue vers ladite entité de serveur de localisation, et
- recevoir (f4,h4,h5b) une indication de redirection dans ladite entité de serveur de communication contenant ladite information d'adressage si ladite vérification est passée.

9. Procédé selon l'une quelconque des revendications 1 à 3, comprenant en outre l'étape précédente consistant à :
- mémoriser dans ladite entité de serveur de communication (CS,CS2) ledit identifiant de service et ladite règle d'utilisation.

10. Procédé selon la revendication 9, comprenant en outre l'étape précédente consistant à :
- recevoir (g2,h2a) ladite règle d'utilisation dans ladite entité de serveur de communication en provenance d'une entité de serveur de localisation.

11. Procédé selon la revendication 9, comprenant en outre l'étape précédente consistant à :
- recevoir (f1a,g1a,h1a) ladite règle d'utilisation dans ladite entité de serveur de communication en provenance d'une entité de serveur d'application.

12. Procédé selon l'une quelconque des revendications 9 à 11, dans lequel l'étape de vérification de ladite règle d'utilisation est effectuée dans ladite entité de serveur de communication.

13. Entité de serveur de localisation (LS) comportant .
- un moyen de mémorisation, agencé afin de mémoriser une information d'adressage (AI) relative à un identifiant de service (SID) qui identifie un service, et
- un moyen de traitement, agencé afin d'accéder audit moyen de mémorisation afin de fournir ladite information d'adressage,
dans lequel: - ledit moyen de mémorisation mémorise en outre une règle d'utilisation (UR) pour autoriser l'utilisation de ladite information d'adressage, et
- lesdits moyens de traitement sont en outre agencés afin de vérifier ladite règle d'utilisation afin de déterminer si ou non ladite information d'adressage peut être fournie ;
**caractérisé en ce que** la règle d'utilisation comprend au moins une condition d'utilisation sélectionnée parmi:
- une condition temporelle (T3) déterminant dans ladite entité de serveur de localisation le laps de temps maximal pour fournir ladite information d'adressage depuis la première fois qu'elle a été fournie à partir dudit serveur de localisation,
- une condition d'utilisation maximale (M) déterminant dans ladite entité de serveur de localisation le nombre de fois que ladite information d'adressage peut être fournie à partir de ladite entité de serveur de localisation,
dans laquelle lesdits moyens de traitement sont agencés afin de vérifier au moins une desdites conditions.

14. Entité de serveur de localisation selon la revendication 13, dans laquelle ladite règle d'utilisation comprend en outre au moins une condition sélectionnée parmi:
- une première condition temporelle (T1) déterminant dans ladite entité de serveur de localisation un temps de début pour fournir ladite information d'adressage,
- une seconde condition temporelle (T2) déterminant dans ladite entité de serveur de localisation un temps d'arrêt pour fournir ladite information d'adressage,
- une condition d'utilisateur demandeur (U) spécifiant au moins un identifiant d'utilisateur d'au moins un utilisateur et déterminant dans ladite entité de serveur de localisation si ledit utilisateur est autorisé à utiliser ledit service ;
et dans laquelle lesdits moyens de traitement sont en outre agencés afin de vérifier au moins une desdites conditions.

15. Entité de serveur de localisation selon la revendication 13, dans laquelle ladite information d'adressage comprend au moins un élément sélectionné parmi :
- une adresse (AA) d'une entité de serveur d'application (AS) qui héberge ledit service,
- une adresse (AC) d'une entité de serveur de communication (CS2) qui peut intervenir dans le routage d'une demande de service contenant ledit identifiant de service,
- une capacité déterminant une adresse (AD) utilisable pour déterminer une adresse d'une entité de serveur de communication (CS2) qui peut intervenir dans le routage d'une demande de service contenant ledit identifiant de service.

16. Entité de serveur de localisation selon une quelconque des revendications 13 à 15, agencée en outre afin de recevoir et mémoriser une règle d'utilisation en relation avec un identifiant de service.

17. Entité de serveur de localisation selon la revendication 16, agencée en outre afin de recevoir ladite règle d'utilisation en provenance d'une entité de serveur d'application.

18. Entité de serveur de localisation selon une quelconque des revendications 13 à 17, agencée en outre afin de transmettre une règle d'utilisation en relation avec un identifiant de service vers une entité de serveur de communication qui peut intervenir dans une demande de service contenant ledit identifiant de service.

19. Entité de serveur de localisation selon une quelconque des revendications 13 à 17, agencée en outre afin de recevoir une interrogation de localisation contenant ledit identifiant de service et de répondre par une réponse d'interrogation contenant ladite information d'adressage si ladite vérification est passée.

20. Entité de serveur de localisation selon une quelconque des revendications 13 à 17, agencée en outre afin de recevoir une demande de service contenant ledit identifiant de service et de répondre par une indication de redirection contenant ladite information d'adressage si ladite vérification est passée.

21. Entité de serveur de communication (CS, CS1, CS2) comportant des moyens de traitement agencés afin de :
- recevoir une demande de service contenant un identifiant de service (SID) qui identifie un service,
- obtenir une information d'adressage (AI) relative audit identifiant de service,
- router une demande de service reçue en utilisant ladite information d'adressage,
- obtenir une règle d'utilisation (UR) pour autoriser l'utilisation de ladite information d'adressage, et
- vérifier ladite règle d'utilisation afin de déterminer si ou non router une demande de service reçue contenant ledit identifiant de service ;
**caractérisée en ce que** la règle d'utilisation comprend au moins une condition d'utilisation sélectionnée parmi:
- une condition temporelle (T3) déterminant dans ladite entité de serveur de communication le laps de temps maximal pour router des demandes de services contenant ledit identifiant de service depuis la première fois qu'une demande de service contenant ledit identifiant de service a été routée à partir de ladite entité de serveur de communication,
- une condition d'utilisation maximale (M) déterminant dans ladite entité de serveur de communication le nombre de fois qu'elle peut router des demandes de services contenant ledit identifiant de service,
dans laquelle lesdits moyens de traitement sont agencés afin de vérifier au moins une desdites conditions.

22. Entité de serveur de communication selon la revendication 21, dans laquelle ladite règle d'utilisation comprend en outre au moins une condition d'utilisation sélectionnée parmi :
- une première condition temporelle (T1) déterminant dans ladite entité de serveur de communication un temps de début pour router des demandes de services contenant ledit identifiant de service,
- une seconde condition temporelle (T2) déterminant dans ladite entité de serveur de communication un temps d'arrêt pour router des demandes de services contenant ledit identifiant de service,
- une condition d'utilisateur demandeur (U) spécifiant au moins un identifiant d'utilisateur d'au moins un utilisateur et déterminant dans ladite entité de serveur de localisation si ledit utilisateur est autorisé à envoyer une demande de service contenant ledit identifiant de service ;
et dans laquelle lesdits moyens de traitement sont en outre agencés afin de vérifier au moins une desdites conditions.

23. Entité de serveur de communication selon les revendications 21 ou 22, agencée en outre afin d'envoyer une interrogation de localisation à un serveur de localisation afin d'obtenir ladite information d'adressage et ladite règle d'utilisation.

24. Entité de serveur de communication selon les revendications 21 ou 22, comprenant en outre un moyen de mémorisation agencé afin de mémoriser ladite règle d'utilisation en relation avec ledit identifiant de service, dans laquelle lesdits moyens de traitement sont en outre agencés afin d'obtenir ladite règle d'utilisation en provenance dudit moyen de mémorisation.

25. Entité de serveur de communication selon la revendication 24, agencée en outre afin de recevoir ladite règle d'utilisation en provenance d'une entité de serveur de localisation et de la mémoriser dans ledit moyen de mémorisation.

26. Entité de serveur de communication selon la revendication 24, agencée en outre afin de recevoir ladite règle d'utilisation en provenance d'une entité de serveur d'application et de la mémoriser dans ledit moyen de mémorisation.

27. Entité de serveur d'application (As) comportant des moyens de traitement agencés afin d'échanger des informations avec une seconde entité de serveur (LS,CS,CS2) qui peut intervenir dans la signalisation d'une demande de service relative à un service ,
lesdits moyens de traitement étant en outre agencés afin d'envoyer à ladite seconde entité de serveur une règle d'utilisation (UR) en relation avec un identifiant de service (SID) pour autoriser l'utilisation de l'information d'adressage (AI) utilisable pour le routage d'une demande de service contenant ledit identifiant de service;
**caractérisée en ce que** la règle d'utilisation comprend au moins une condition d'utilisation sélectionnée parmi:
- une condition temporelle (T3) déterminant le laps de temps maximal pour utiliser ladite information d'adressage depuis la première fois qu'elle a été utilisée,
- une condition d'utilisation maximale (M) déterminant le nombre de fois que ladite information d'adressage peut être utilisée.

28. Programme informatique pour fournir des informations en vue du routage d'une demande de service contenant un identifiant de service (SID) qui identifie un service, comprenant :
- un code de programme pouvant être lu par un ordinateur afin d'amener un serveur de localisation informatique à fournir une information d'adressage (AI) relative audit identifiant de service , et
- un code de programme pouvant être lu par un ordinateur pour amener ledit serveur de localisation informatique à vérifier une règle d'utilisation (UR) qui autorise l'utilisation de ladite information d'adressage afin de déterminer si ou non ladite information d'adressage peut être fournie; **caractérisée en ce que**
la règle d'utilisation comprend au moins une condition d'utilisation sélectionnée parmi :
- une condition temporelle (T3) déterminant le laps de temps maximal pour utiliser ladite information d'adressage depuis la première fois qu'elle a été utilisée,
- une condition d'utilisation maximale (M) déterminant le nombre de fois que ladite information d'adressage peut être utilisée,
lorsque ledit programme est exécuté sur ledit serveur.

29. Programme informatique pour router une demande de service contenant un identifiant de service (SID) qui identifie un service, comprenant :
- un code de programme pouvant être lu par un ordinateur afin d'amener un serveur de communication informatique à obtenir une information d'adressage (AI) relative audit identifiant de service,
- un code de programme pouvant être lu par un ordinateur afin d'amener ledit serveur de communication informatique à router la demande de service reçue en utilisant ladite information d'adressage,
- un code de programme pouvant être lu par un ordinateur afin d'amener ledit serveur de communication informatique à obtenir une règle d'utilisation (UR) qui autorise l'utilisation de ladite information d'adressage, et
- un code de programme pouvant être lu par un ordinateur afin d'amener ledit serveur de communication informatique à vérifier ladite règle d'utilisation afin de déterminer si ou non router une demande de service reçue contenant ledit identifiant de service;
**caractérisé en ce que** la règle d'utilisation comprend au moins une condition d'utilisation sélectionnée parmi :
- une condition temporelle (T3) déterminant le laps de temps maximal pour utiliser ladite information d'adressage depuis la première fois qu'elle a été utilisée,
- une condition d'utilisation maximale (M) déterminant le nombre de fois que ladite information d'adressage peut être utilisée,
lorsque ledit programme est exécuté sur ledit serveur.
